# EUROPEAN PATENT SPECIFICATION

(11) **EP 2 457 963 B1**
(45) Date of publication and mention of the grant of the patent: **05.03.2014**
(21) Application number: 11190170.8
(22) Date of filing: 22.11.2011
(51) Int. Cl.: C09D 11/10, C09D 11/00

(54) **Ink set, ink jet recording method, and ink jet recording apparatus**
Tintensatz, Tintenstrahlaufzeichnungsverfahren und Tintenstrahlaufzeichnungsgerät
Jeu d'encre, procédé d'enregistrement par jet d'encre et appareil d'enregistrement par jet d'encre

(30) Priority: 25.11.2010 JP 2010261989
(43) Date of publication of application: 30.05.2012
(73) Proprietor: Fujifilm Corporation, Minato-ku Tokyo (JP)
(72) Inventor: Oshima, Yasuhito, Ashigarakami-gun, Kanagawa 258-8577 (JP)
(74) Representative: Morpeth, Fraser Forrest

(56) References cited:
- EP-A1- 1 958 994
- EP-A1- 1 975 210

## Description

### BACKGROUND OF THE INVENTION

1. Field of the Invention

The present invention relates to an ink set, an ink jet recording method, and an ink jet recording apparatus.

2. Description of the Related Art

Image recording methods in which images are formed on a recording medium, such as paper, based on image data signals include an electrophotographic method, a sublimation thermal transfer method, a thermal wax transfer method, an inkjet method, and the like.

In the ink jet method, since inks are ejected to only necessary image portions using an inexpensive apparatus, and images are directly formed on a recording medium, inks can be used efficiently, and the running costs are cheap. Furthermore, the ink jet method produces only a small noise, and is excellent as an image recording method.

In recent years, a solvent-free ink jet recording method in which ink compositions (radiation curable ink composition) that can be cured by irradiation of radiant rays, such as ultraviolet rays, are used to draw images by ink jet, and then irradiated by radiant rays, such as ultraviolet rays, so as to cure the inks, has been gaining attention.

Generally, in comparison to aqueous inks including water as a diluent or solvent-based inks including an organic solvent as a diluent, the ink jet recording method in which a radiation curable ink is used can draw images on a non-absorbent recording medium, such as glass, metal, and plastic recording media, and has a wide range of applicable recording media. In addition, since the above method not only has the excellent abrasion resistance or solvent resistance of drawn images, high sensitivity, and excellent productivity, but also includes no volatile solvent, the environmental burden is small.

The curing mechanisms of the radiation curable inks are roughly classified into a radical polymerization type and a cation polymerization type, and, in comparison to the cation polymerization type, the radical polymerization type has the merits of excellent storage stability and low price, and thus is widely used on the market.

Conventional ink sets include the ink set as described in JP2010-138315A.

JP2010-138315A describes active light curable ink compositions and an ink set composed by including an active light curable ink composition including a black color material, in which the active light curable ink compositions contain at least a color material, a polymerizable compound, and a photopolymerizable initiator respectively, an active light curable ink composition including a yellow color material and the active light curable ink composition including a black color material include from 1% by mass to 4% by mass of a thioxanthone-based photopolymerization initiator having a plurality of functional groups with respect to the total amount of the ink composition as the photopolymerization initiator, and an active light curable ink composition including a cyan color material and an active light curable ink composition including a magenta color material do not substantially include the thioxanthone-based photopolymerization initiator.

### SUMMARY OF THE INVENTION

An object of the invention is to provide an ink set that can provide excellent glossiness to obtained images and suppress banding occurrence and hue changes, an ink jet recording method in which the ink set is used, and an ink jet recording apparatus provided with the ink set.

The ink set of the invention which can solve the problem includes a yellow ink composition, a magenta ink composition, a cyan ink composition, and a black ink composition, the respective ink compositions contain a radical polymerizable compound (component A), a radical polymerization initiator (component B), and a colorant (component C) respectively, the component B included in the respective ink compositions contains an acylphosphine oxide compound (component B-1) and a thioxanthone compound (component B-2) respectively, the respective ink compositions contain from 3% by mass to less than 17% by mass of the component B-1 with respect to the total amount of the ink composition respectively, the magenta ink composition and the cyan ink composition contain from 0.1% by mass to less than 2% by mass of the component B-2 with respect to the total amount of the ink composition respectively, and the yellow ink composition and the black ink composition contain from 2% by mass to less than 6% by mass of the component B-2 with respect to the total amount of the ink composition respectively.

A first preferred embodiment of the invention further includes a white ink composition containing the radical polymerizable compound (component A), the radical polymerization initiator (component B), and the colorant (component C), the component B included in the white ink composition contains the acylphosphine oxide compound (component B-1) and the thioxanthone compound (component B-2), and the white ink composition contains from 3% by mass to less than 17% by mass of the component B-1 with respect to the total amount of the ink composition and from more than 0% by mass to less than 1% by mass of the component B-2 with respect to the total amount of the ink composition or no component B-2.

In addition, in a second preferred embodiment of the invention, the component B-2 included in the respective ink compositions is isopropyl thioxanthone, or the component A included in the respective ink compositions respectively contains from 80% by mass to less than 100% by mass of a monofunctional radical polymerizable compound with respect to the total amount of the component A.

In addition, in a third preferred embodiment of the invention, the component A included in the respective ink compositions respectively contains at least one compound selected from a group consisting of compounds represented by the formulae (1) to (3).

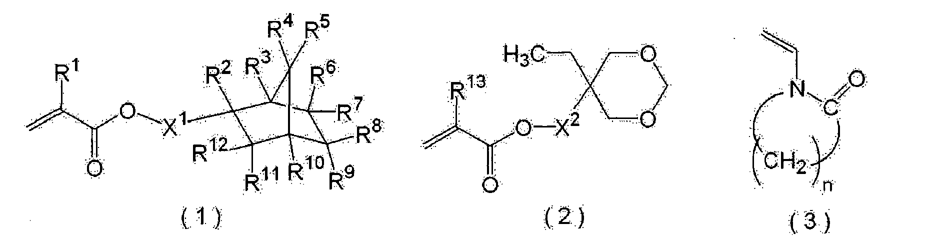

(In the formulae, R¹ represents a hydrogen atom or a methyl group, X¹ represents a single-bonded or divalent linking group, R² to R¹² represent a hydrogen atom or an alkyl group respectively, R¹³ represents a hydrogen atom or a methyl group, X² represents a single-bonded or divalent linking group, and n represents an integer of 2 to 6.)

In addition, in a fourth preferred embodiment of the invention, the component A contains at least two compounds selected from a group consisting of compounds represented by the formulae (1) to (3).

In addition, in a fifth preferred embodiment of the invention, the component C included in the yellow ink composition is at least one colorant selected from a group consisting of C. 1. Pigment Yellow 120, 150, 155, and 180, the component C included in the magenta ink composition is at least one colorant selected from a group consisting of C. I. Pigment Red 122, 202, and C. 1. Pigment Violet 19, the component C included in the cyan ink composition is at least one colorant selected from a group consisting of C. I. Pigment Blue 15:3 and 15:4, and the component C included in the black ink composition is C. I. Pigment Black 7.

In addition, in a sixth preferred embodiment of the invention, the component A included in the yellow ink composition, the magenta ink composition, the cyan ink composition, and the black ink composition further contains a (meth)acrylate compound having a chain-like hydrocarbon group with a carbon number of 8 to 13, or the ink set is for ink jet recording.

The invention includes an ink jet recording method in which the ink set is used, or an ink jet recording apparatus provided with the ink set.

According to the invention, it is possible to provide an ink set that can provide excellent glossiness to obtained images and suppress banding occurrence and hue changes, an ink jet recording method in which the ink set is used, and an ink jet recording apparatus provided with the ink set.

### DESCRIPTION OF THE PREFERRED EMBODIMENTS

Hereinafter, the invention will be described in detail.

Meanwhile, in the specification, the expression "A to B," which indicates a numeric value range, has the same meaning as "not less than A and not more than B." In addition, "radical polymerizable compound (component A)" and the like may be referred to simply as "component A."

(Ink set)

The ink set of the invention includes a yellow ink composition, a magenta ink composition, a cyan ink composition, and a black ink composition, the respective ink compositions contain a radical polymerizable compound (component A), a radical polymerization initiator (component B), and a colorant (component C) respectively, the component B included in the respective ink compositions contains an acylphosphine oxide compound (component B-1) and a thioxanthone compound (component B-2) respectively, the respective ink compositions contain 3% by mass to less than 17% by mass of the component B-1 with respect to the total amount of the ink composition respectively, the magenta ink composition and the cyan ink composition contain 0.1% by mass to less than 2% by mass of the component B-2 with respect to the total amount of the ink composition respectively, and the yellow ink composition and the black ink composition contain 2% by mass to less than 6% by mass of the component B-2 with respect to the total amount of the ink composition respectively.

JP2010-138315A describes that, while a specific amount of a thioxanthone-based photopolymerization initiator having a plurality of functional groups is contained in an active light curable ink composition including a yellow-based color material or a black-based color material, the thioxanthone-based photopolymerization initiator is not added to an active light curable ink composition including a magenta color material and an active light curable ink composition including a cyan color material. However, the method as described in JP2010-138315A yet cannot be told to be sufficient in achieving excellent glossiness, banding suppression, and hue change suppression, and there has been demand for additional performance improvement.

The present inventors found that containing an acylphosphine oxide compound and a thioxanthone compound in a yellow ink composition, a magenta ink composition, a cyan ink composition, and a black ink composition, furthermore, necessarily containing the thioxanthone compound in the yellow ink composition and the black ink composition, and containing a slightly large amount of the thioxanthone compound in the magenta ink composition and the cyan ink composition can form images that are excellent in terms of glossiness, banding suppression, and hue change suppression.

The ink set of the invention includes a yellow ink composition, a magenta ink composition, a cyan ink composition, and a black ink composition.

The ink set of the invention is preferably an ink set for ink jet recording.

In addition, the ink set of the invention is preferably an ink set for forming color images.

In addition, the ink set of the invention may contain other color ink compositions, such as a white ink composition. Among them, the ink set of the invention preferably includes a yellow ink composition, a magenta ink composition, a cyan ink composition, a black ink composition, and a white ink composition.

In addition, the ink set of the invention may have only one or two or more of the ink compositions of the respective colors.

In the ink set of the invention, the respective ink compositions of the yellow ink composition, the magenta ink composition, the cyan ink composition, and the black ink composition contain a radical polymerizable compound (component A), a radical polymerization initiator (component B), and a colorant (component C) respectively, and, furthermore, contain an acylphosphine oxide compound (component B-1) and a thioxanthone compound (component B-2) respectively.

The respective ink compositions containing the acylphosphine oxide compound (component B-1) and the thioxanthone compound (component B-2) can suppress banding and also obtain images excellent in terms of glossiness. Meanwhile, banding refers to a phenomenon in which linear image defects occur in images. Examples of the linear image defects include linear white outlined areas and linear places where the image concentration is higher or lower.

In the ink set of the invention, the respective ink compositions of the yellow ink composition, the magenta ink composition, the cyan ink composition, and the black ink composition contain 3% by mass to less than 17% by mass of the component B-1 with respect to the total amount of the ink composition, preferably 5% by mass to 15% by mass, and more preferably 7% by mass to 13% by mass.

In addition, when the ink set of the invention includes other color ink compositions, such as a white ink composition, each of the other color ink compositions contains the component B-1 preferably in 3% by mass to less than 17% by mass, more preferably in 5% by mass to less than 15% by mass, and further preferably 3% by mass to less than 17% by mass with respect to the total amount of the ink composition.

The respective ink compositions containing the acylphosphine oxide compound (component B-1) in the above amount produce excellent curing properties. In addition, it is possible to suppress occurrence of banding in obtained images.

In the ink set of the invention, the magenta ink composition and the cyan ink composition respectively contain 0.1% by mass to less than 2% by mass of the component B-2 with respect to the total amount of the ink composition, preferably 0.3% by mass to 1.5% by mass, and more preferably 0.5% by mass to 1.0% by mass. With the component B-2 in the above ranges, hue changes can be suppressed in obtained images. The hue change as mentioned herein refers to a change in hue occurring during several minutes to several hours from immediately after irradiation of active energy rays, and does not mean discoloring of hues caused by irradiation of sunlight over a long term of several months. When the hue change occurs, so-called color management, such as color matching, becomes difficult, and significant obstacles are caused in printing operations. Meanwhile, while the cause of the hue change is not specified, it is considered that irradiation of active energy rays makes the thioxanthone compound generate active intermediates that absorb visible light rays in a visible light range in the vicinity of 400 nm to 500 nm, and the hue change is caused by loss of the absorbed visible light rays when the active intermediates gradually turn into a stable structure.

In addition, the yellow ink composition and the black ink composition that can be used in the ink set of the invention respectively contain 2% by mass to less than 6% by mass of the component B-2 with respect to the total amount of the ink composition. When the content is less than 2% by mass, banding of images is degraded, and when the content is 6% by mass or more, glossiness of images is degraded.

Furthermore, in the ink set of the invention, the content of the component B-2 in each of the yellow ink composition and the black ink composition is preferably 2.5% by mass to 5.5% by mass, and more preferably 3.0% by mass to 5.0% by mass with respect to the total amount of the ink composition. In the above ranges, a composition excellent in terms of curing properties can be obtained. In addition, it is possible to form images for banding occurrence is suppressed.

When the ink set of the invention includes a white ink composition, the white ink composition preferably contains more than 0% by mass to less than 1% by mass of the component B-2 with respect to the total amount of the ink composition or no component B-2, more preferably more than 0% by mass to less than 1% by mass, and further preferably 0.1% by mass to 0.8% by mass.

In addition, when the ink set of the invention includes ink compositions of colors other than yellow, magenta, cyan, black, and white, each of the other color ink compositions may contain the component B-2 or no component B-2. When the component B-2 is contained, the component is preferably contained in more than 0% by mass to less than 6% by mass with respect to the total amount of the ink composition.

The ink set of the invention preferably contains the same kind of acylphosphine oxide compound in the respective ink compositions respectively, and particularly preferably contains the same acylphosphine oxide compound respectively from the viewpoint of curing properties, banding suppressing properties, and glossiness.

In addition, the ink set of the invention preferably contains two or more acylphosphine oxide compounds as the component B-1 in the respective ink compositions respectively, and more preferably contains one or more monoacylphosphine oxide compounds and one or more bisacylphosphine oxide compounds respectively from the viewpoint of curing properties, banding suppressing properties, and glossiness.

The ink composition that can be used in the ink set of the invention will be described in detail.

The ink composition that can be used in the invention is an oil-based ink composition that can be cured by active radiant rays. The "active radiant rays" are radiant rays that can supply energy generating initiating kinds in the ink composition when being irradiated, and includes α rays, γ rays, X rays, ultraviolet rays, visible light rays, electron rays, and the like. Among the above, ultraviolet rays and electron rays are preferred, and ultraviolet rays are more preferred from the viewpoint of curing sensitivity and ease of procuring an apparatus.

(Component A) Radical polymerizable compound

The ink composition that can be used in the ink set of the invention contains a radical polymerizable compound (component A).

An ethylenic unsaturated compound is preferred as the component A.

In addition, well-known polymerizable compounds can be used as the component A, and examples thereof include (meth)acrylate compounds, vinyl ether compounds, aryl compounds, N-vinyl compounds, unsaturated carboxylic acids, and the like. For example, the radical polymerizable monomer as described in JP2009-221414A, the polymerizable compound as described in JP2009-209289, and the ethylenic unsaturated compounds as described in JP2009-191183A are included.

The component A may be contained singly or two or more may be contained.

The component A included in the respective ink compositions preferably includes at least one of the compounds represented by the following formulae (1) to (3), and more preferably includes at least two of the compounds represented by the following formulae (1) to (3).

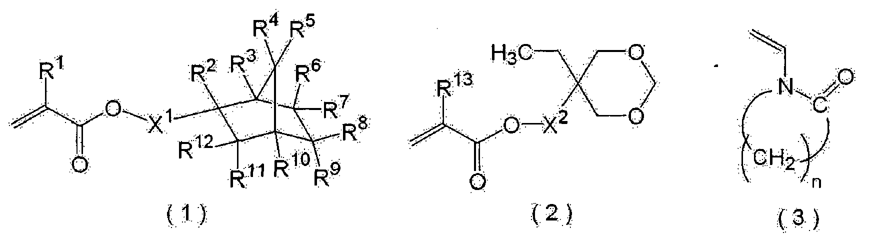

(In the formulae, R¹ represents a hydrogen atom or a methyl group, X¹ represents a single-bonded or divalent linking group, R² to R¹² represent a hydrogen atom or an alkyl group respectively, R¹³ represents a hydrogen atom or a methyl group, X² represents a single-bonded or divalent linking group, and n represents an integer of 2 to 6.)

<Compound represented by the formula (1)>

The ink composition that can be used in the invention preferably contains a compound represented by the formula (1) from the viewpoint of glossiness. 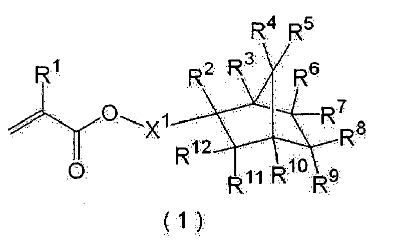 (In the formula (1), R¹ represents a hydrogen atom or a methyl group, X¹ represents a single-bonded or divalent linking group, and R² to R¹² represent a hydrogen atom or an alkyl group respectively.)

The compound represented by the formula (1) may be an acrylate compound or a methacrylate compound, but is preferably an acrylate compound, that is, R¹ is a hydrogen atom.

The divalent linking group in the X¹ in the formula (1) is not particularly limited as long as the effects of the invention are not significantly impaired, but preferably a divalent hydrocarbon group or a divalent group in which a hydrocarbon group and ether bonding are combined, and more preferably a divalent hydrocarbon group, a poly(alkyleneoxy) group, or a poly(alkyleneoxy) alkyl group. In addition, the number of carbon atoms in the divalent linking group is preferably 1 to 60, and more preferably 1 to 40.

The X¹ in the formula (1) is preferably a single bond, a divalent hydrocarbon group, or a divalent group in which a hydrocarbon group and ether bonding are combined, more preferably a single bond or a divalent hydrocarbon group, and particularly preferably a single bond.

The alkyl group in the R² to R¹² in the formula (1) is preferably an alkyl group having a carbon atom number of 1 to 8, more preferably an alkyl group having a carbon atom number of 1 to 4, and particularly preferably a methyl group respectively. In addition, the alkyl group in the R² to R¹² may have a straight-chain shape, branches, or a ring structure.

The R² to R¹² in the formula (1) are preferably a hydrogen atom or an alkyl group having a carbon atom number of 1 to 8 respectively, more preferably a hydrogen atom or an alkyl group having a carbon atom number of 1, to 4, and further preferably a hydrogen atom or a methyl group.

In addition, it is particularly preferable that all of the R² to R¹² in the formula (1) be a hydrogen atom, or R³ to R⁵ be a methyl group and R² and R⁶ to R¹² be a hydrogen atom, and most preferable that R³ to R⁵ be a methyl group and R² and R⁶ to R¹² be a hydrogen atom.

The compound represented by the formula (1) may be used singly, or two or more may be jointly used.

Specific examples of the compound represented by the formula (1) preferably include the compounds (1-1) to (1-6) shown below, but it is needless to say that the specific examples are not limited thereto.

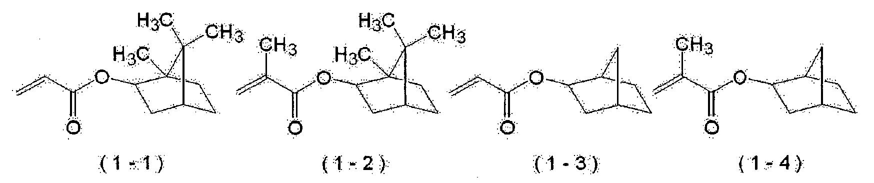

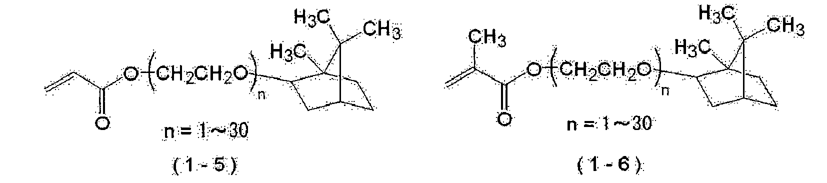

Among the above, as the compound represented by the formula (1), isobornyl acrylate (1-1), isobornyl methacrylate (1-2), norbornyl acrylate (1-3), and norbornyl methacrylate (1-4) are preferred, isobornyl acrylate (1-1) and isobornyl methacrylate (1-2) are more preferred, and isobornyl acrylate (1-1) is particularly preferred.

When the ink composition contains the compound represented by the formula (1), the content of the compound represented by the formula (1) is preferably 5% by mass to 55% by mass, more preferably 8% by mass to 45% by mass, and further preferably 15% by mass to 40% by mass with respect to the total mass of the ink composition.

<Compound represented by the formula (2)>

The ink composition that can be used in the invention preferably contains a compound represented by the formula (2) from the viewpoint of glossiness and curing properties.

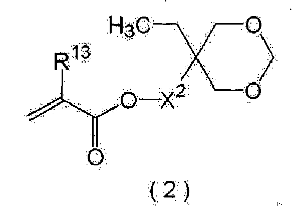

(In the formula (2), R¹³ represents a hydrogen atom or a methyl group, and X² represents a single-bonded or divalent linking group.)

The compound represented by the formula (2) may be an acrylate compound or a methacrylate compound, but is preferably an acrylate compound, that is, R¹³ is a hydrogen atom.

The divalent linking group in the X² in the formula (2) is not particularly limited as long as the effects of the invention are not significantly impaired, but preferably a divalent hydrocarbon group or a divalent group in which a hydrocarbon group and ether bonding are combined, and more preferably a divalent hydrocarbon group, a poly(alkyleneoxy) group, or a poly(alkyleneoxy) alkyl group. In addition, the number of carbon atoms in the divalent linking group is preferably 1 to 60, and more preferably 1 to 20.

The X² in the formula (2) is preferably a single bond, a divalent hydrocarbon group, or a divalent group in which a hydrocarbon group and ether bonding are combined, more preferably a divalent hydrocarbon group having a carbon atom number of 1 to 20, further preferably a divalent hydrocarbon group having a carbon atom number of 1 to 8, and particularly preferably a methylene group.

The compound represented by the formula (2) may be used singly, or two or more may be jointly used.

Specific examples of the compound represented by the formula (2) preferably include the compounds (2-1) to (2-4) shown below, but it is needless to say that the specific examples are not limited thereto.

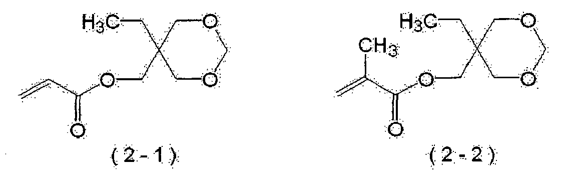

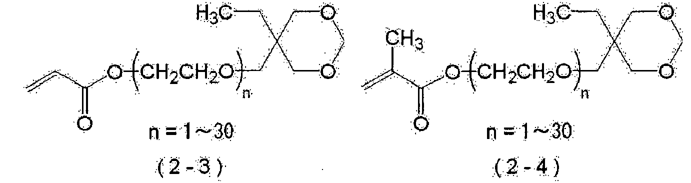

Among the above, cyclic trimethylol-propane formal acrylate (2-1) and cyclic trimethylol-propane formal methacrylate (2-2) are preferred, and cyclic trimethylol-propane formal acrylate (2-1) is particularly preferred.

When the ink composition contains the compound represented by the formula (2), the content of the compound represented by the formula (2) is preferably 3% by mass to 70% by mass, more preferably 5% by mass to 65% by mass, further preferably 10% by mass to 60% by mass, and particularly preferably 10% by mass to 24% by mass with respect to the total mass of the ink composition.

In addition, when the ink composition contains the compound represented by the formula (1) and the compound represented by the formula (2), the total content of the compound represented by the formula (1) and the compound represented by the formula (2) is preferably 10% by mass to 80% by mass, more preferably 25% by mass to 70% by mass, and particularly preferably 35% by mass to 65% by mass with respect to the total mass of the ink composition. In the above ranges, printed objects having excellent glossiness can be obtained.

<Compound represented by the formula (3)>

The ink composition that can be used in the invention preferably contains a compound represented by the formula (3) from the viewpoint of glossiness.

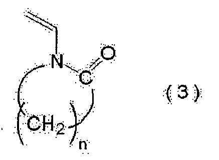

In the formula (3), n represents an integer of 2 to 6, and n is preferably an integer of 3 to 6, more preferably 3 or 5, and particularly preferably 5, that is, the compound is N-vinyl caprolactam from the viewpoint of flexibility of the cured ink composition, adhesiveness of a recording medium, and procuring properties of raw materials. N-vinyl caprolactam is excellent in terms of stability, versatile enough to be procured at relatively low costs, and preferred particularly because favorable ink curing properties and adhesiveness of a cured film to a recording medium can be obtained.

In addition, as N-vinyl lactams other than the compound represented by the formula (3), compounds having a substituent, such as an alkyl group or an aryl group, on a lactam ring may be used, and compound having saturated or unsaturated ring structure connected may be used.

The compound represented by the formula (3) may be used singly, or two or more may be jointly used.

When the ink composition contains the compound represented by the formula (3), the content of the compound represented by the formula (3) is preferably 1% by mass to 35% by mass, more preferably 3% by mass to 24% by mass, further preferably 5% by mass to 20% by mass, and particularly preferably 10% by mass to 18% by mass with respect to the full mass of the ink composition. In the above ranges, the curing properties inside printed objects are strongly accelerated, a curing profile in which the outermost surface of a cured film is selectively maintained in a liquid state over a long term is accelerated, and printed objects having superior glossiness and unnoticeable band variation can be obtained.

When the compound represented by the formula (3) is jointly used with the compound represented by the formula (1) and/or the compound represented by the formula (2) in the ink composition, it is needless to say that the total content of these compounds does not exceed 100% by mass with respect to the total mass of the ink composition.

<(Meth)acrylate compound having a chain-like hydrocarbon group with a carbon number of 8 to 13>

The ink composition that can be used in the invention preferably contains a (meth)acrylate compound having a chain-like hydrocarbon group with a carbon number of 8 to 13 from the viewpoint of improvement of the glossiness of printed objects.

The chain-like hydrocarbon group may be a straight-chain hydrocarbon group or a branched-chain hydrocarbon group.

The (meth)acrylate compound having a chain-like hydrocarbon group with a carbon number of 8 to 13 is preferably a (meth)acrylic acid ester of a chain-like hydrocarbon monoalcohol with a carbon number of 8 to 13, and more preferably a (meth)acrylic acid ester of a chain-like hydrocarbon monoalcohol with a carbon number of 10 to 13.

Meanwhile, in the invention, there are cases in which "(meth)acrylate" is written when both or either of "acrylate" and "methacrylate" are pointed out, and "(meth)acryl" is written when both or either of "acryl" and "methacryl" are pointed out.

The (meth)acrylate compound having a chain-like hydrocarbon group with a carbon number of 8 to 13 may be an acrylate compound or a methacrylate compound, but is preferably an acrylate compound.

Specific examples of (meth)acrylate compounds having a chain-like hydrocarbon group with a carbon number of 8 to 13 include octyl (meth)acrylate, isooctyl (meth)acrylate, nonyl (meth)acrylate, decyl (meth)acrylate, isodecyl (meth)acrylate, lauryl (meth)acrylate, tridecyl (meth)acrylate, and the like. Among the above, isooctyl (meth)acrylate, decyl (meth)acrylate, isodecyl (meth)acrylate, lauryl (meth)acrylate, and tridecyl (meth)acrylate are preferred, isooctyl (meth)acrylate, isodecyl (meth)acrylate, and tridecyl (meth)acrylate are more preferred, and isodecyl (meth)acrylate is particularly preferred.

When the ink composition contains a (meth)acrylate compound having a chain-like hydrocarbon group with a carbon number of 8 to 13, the content of the (meth)acrylate compound having a chain-like hydrocarbon group with a carbon number of 8 to 13 is preferably 3% by mass to 25% by mass, more preferably 5% by mass to 20% by mass, further preferably 8% by mass to 18% by mass, and particularly preferably 10% by mass to 16% by mass with respect to the full mass of the ink composition. When the content of the (meth)acrylate compound having a chain-like hydrocarbon group with a carbon number of 8 to 13 is in the above ranges, an ink composition that can supply slightly sticky cured films and printed objects having excellent glossiness can be obtained.

< Multifunctional radical polymerizable compound>

The ink composition that can be used in the invention preferably contains a multifunctional radical polymerizable compound, and more preferably contains a multifunctional (meth)acrylate compound from the viewpoint of curing properties and glossiness.

In addition, the ink composition that can be used in the invention preferably contains a multifunctional vinyl ether compound.

Furthermore, the ink composition that can be used in the invention particularly preferably contains a multifunctional (meth)acrylate compound and a multifunctional vinyl ether compound.

When the ink composition contains a multifunctional radical polymerizable compound, the content of the multifunctional radical polymerizable compound is preferably 1% by mass to 35% by mass, more preferably 3% by mass to 25% by mass, further preferably 4% by mass to 20% by mass, and particularly preferably 5% by mass to 15% by mass with respect to the total mass of the ink jet ink composition.

In addition, the multifunctional (meth)acrylate compound is preferably a difunctional (meth)acrylate compound or a trifunctional (meth)acrylate compound, and more preferably a difunctional (meth)acrylate compound.

Preferred examples of the multifunctional (meth)acrylate include a difunctional (meth)acrylate compound having aliphatic hydrocarbon chains with a carbon number of 5 or more in the molecules. Specific examples include neopentyl glycol di(meth)acrylate, PO-modified neopentyl glycol diacrylate, hexanediol diacrylate, PO-modified hexanediol diacrylate, nonanediol di(meth)acrylate, decanediol di(meth)acrylate, dodecanediol di(meth)acrylate, tridecanediol di(meth)acrylate, octadecanediol di(meth)acrylate, 3-methyl-1,5-pentanediol di(meth)acrylate, 2-n-butyl-2-ethyl-1,3-propanediol di(meth)acrylate, cyclohexane dimethanol di(meth)acrylate, cyclohexane di(meth)acrylate, and the like.

Other multifunctional radical polymerizable compounds include methacrylate derivatives, such as aryl (meth)acrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, polypropylene glycol di(meth)acrylate, pentaerythritol tri(meth)acrylate, pentaerythritol tetra(meth)acrylate, dipentaerythritol tetra(meth)acrylate, trimethylolethane tri(meth)acrylate, trimethylolpropane tri(meth)acrylate, tetramethylolmethane tetra(meth)acrylate, and 2,2-bis(4-(meth)acryloxy polyethoxyphenyl) propane; derivatives of aryl compounds, such as diarylphthalate, and triaryl trimellitate; di- or trivinyl ether compounds, such as ethylene glycol divinyl ether, diethylene glycol divinylether, triethylene glycol divinylether, propylene glycol divinyl ether, dipropylene glycol divinyl ether, butanediol divinyl ether, hexanediol divinyl ether, cyclohexane dimethanol divinyl ether, and trimethylol propane trivinyl ether.

<Monofunctional (meth)acrylate compound having aromatic groups>

In addition, the ink composition preferably includes a monofunctional (meth)acrylate compound having aromatic groups as the component A. The ring structure of the aromatic group in the monofunctional (meth)acrylate compound having aromatic groups may also include hetero atoms, such as O, N, and S.

Preferred examples of the aromatic ring structure that the monofunctional (meth)acrylate compound having aromatic groups may have include benzene, naphthalene, anthracene, indene, fluorine, 1H-phenalene, phenanthrene, triphenylene, pyrene, naphthacene, tetraphene, biphenyl, as-indacene, s-indacene, acenaphthylene, fluoranthene, acephenanthrylene, aceanthrylene, chrysene, pleiadene, furane, thiophen, pyrroline, pyrazoline, imidazoline, isooxazoline, isothiazoline, pyridine, pyridazine, pyrimidine, pyrazine, triazole, tetrazole, and the like.

Among the above, particularly preferred examples of the monofunctional (meth)acrylate compound having aromatic groups include phenoxyethyl (meth)acrylate.

In addition, it is possible to use monofunctional (meth)acrylate compounds other than the above monofunctional (meth)acrylate compounds as the component A. Preferred examples of the monofunctional (meth)acrylate compounds include 2-ethylhexyl (meth)acrylate, 2-hydroxyethyl (meth)acrylate, butoxyethyl (meth)acrylate, carbitol (meth)acrylate, cyclohexyl (meth)acrylate, tetrahydrofurfuryl (meth)acrylate, benzyl (meth)acrylate, methyl (meth)acrylate, n-butyl (meth)acrylate, dimethyl aminomethyl (meth)acrylate, oligo ester (meth)acrylate, and epoxy (meth)acrylate.

In addition, it is possible to use a monofunctional vinyl ether compound as the component A. Examples of the monofunctional vinyl ether compound include ethylene glycol monovinyl ether, triethylene glycol monovinyl ether, hydroxyl ethyl monovinyl ether, ethyl vinyl ether, n-butyl vinyl ether, isobutyl vinyl ether, octa decyl vinyl ether, cyclohexyl vinyl ether, hydroxyl butyl vinyl ether, 2-ethyl hexyl vinyl ether, hydroxyl nonyl monovinyl ether, cyclohexane dimethnol monovinylether, n-propyl vinyl ether, isopropyl vinyl ether, isopropenyl vinyl ether, dodecyl vinyl ether, diethylene glycol monovinyl ether, aryl glycidyl ether, and the like.

It is also possible to use as the component A a radical polymerizable compound, such as unsaturated carboxylic acids, such as acrylic acid, methacrylic acid, itaconic acid, chrotonic acid, isochrotonic acid, and maleic acid, and salts thereof, anhydrides having an ethylenic unsaturated group, acrylonitrile, styrene, furthermore, a variety of unsaturated polyesters, unsaturated polyesters, unsaturated polyamides, unsaturated urethanes, acrylamide (for example, N-methylol (meth)acrylamide, diacetone(meth)acrylamide), and the like.

Specifically, as the component A, it is possible to use commercially available products as described in "Cross-linking agent handbook" edited by Shinzo Yamashita (1981, published by Taiseisha Ltd.); "UV·EB curing handbook (concerning raw materials)" edited by Kiyomi Kato (1985, published by the Society of Polymer Publications); "Application and markets of UV·EB curing technologies" edited by RadTech Japan, P.79 (1989, published by CMC Publishing Co., Ltd.); "Polyester resin handbook" edited by Eiichiro Takiyama (1988, published by The Nikkan Kogyo Shinbun Ltd.), and the like or well-known radical polymerizable or crosslinkable monomers, oligomers, and polygomers in the field.

The molecular weight of the component A is preferably 80 to 2,000, more preferably 80 to 1,000, and further preferably 80 to 800.

In each of the ink compositions, the content of a monofunctional radical polymerizable compound is preferably 60% by mass to less than 100% by mass, more preferably 70% by mass to less than 100% by mass, further preferably 80% by mass to less than 100% by mass, and particularly preferably 80% by mass to less than 90% by mass with respect to the full mass of the component A included in the ink composition from the viewpoint of flexibility.

The content of the component A in each of the ink compositions is preferably 50% by mass or more, more preferably 55% by mass to 98% by mass, and further preferably 60% by mass to 95% by mass with respect to the full mass of the ink composition.

(Component B) Radical polymerization initiator

The ink composition that can be used in the invention contains a radical polymerization initiator (component B).

In addition, the ink composition that can be used in the invention contains the acylphosphine oxide compound (component B-1) and the thioxanthone compound (component B-2) as the radical polymerization initiator (component B).

The radical polymerization initiator in the invention includes not only a compound that absorbs external enery, such as the active radiant rays, so as to generate a radical polymerization initiating kind but also a compound that absorbs specific active energy rays so as to accelerate decomposition of a polymerization initiator (so called a sensitizer).

The polymerization initiator may jointly use a radical polymerization initiator other than the above in addition to the component B-1 and the component B-2.

<(Component B-1) Acylphosphine oxide compound>

The ink composition that can be used in the invention contains 3% by mass to less than 17% by mass of the acylphosphine oxide compound (component B-1) as the radical polymerization initiator (component B) with respect to the total amount of the ink composition.

The component B-1 may be used singly, or two or more may be jointly used.

Preferred examples of the component B-1 include monoacylphosphine oxide compounds and bisacylphosphine oxide compounds.

The ink set of the invention preferably contains two or more acylphosphine oxide compounds as the component B-1 in the respective ink compositions, and more preferably contains one or more monoacylphosphine oxide compounds and one or more bisacylphosphine oxide compounds in the respective ink compositions from the viewpoint of curing properties, banding suppressing properties, and glossiness.

Preferred monoacylphosphine oxide compounds include the acylphosphine oxide compound as described in JP2008-208190A.

Specifically, the mono acylphosphine oxide compounds include isobutyryl methyl phosphinic acid methyl ester, isobutyryl phenyl phosphinic acid methyl ester, pivaloyl phenylphosphinic acid methyl ester, 2-ethyl hexanoyl phenylphosphinic acid methyl ester, pivaloyl phenylphosphinic acid isopropyl ester, p-toluyl phenylphosphinic acid methyl ester, o-toluyl phenylphosphinic acid methyl ester, 2,4-dimethyl benzoyl phenylphosphinic acid methyl ester, p-t-butyl benzoyl phenylphosphinic acid isopropyl ester, acryloyl phenylphosphinic acid methyl ester, isobutyryl diphenylphosphine oxide, 2-ethylhexanoyl diphenylphosphine oxide, o-toluyl diphenylphosphine oxide, p-t-butyl benzoyl diphenylphosphine oxide, 3-pyridyl carbonyl diphenylphosphine oxide, acryloyl-diphenyl phosphine oxide, benzoyl diphenylphosphine oxide, pivaloyl phenylphosphinic acid vinyl ester, adipoyl bis diphenylphosphine oxide, pivaloyl diphenylphosphine oxide, p-toluyl diphenyl phosphine oxide, 4-(t-butyl) benzoyl diphenylphosphine oxide, terephthaloyl bis diphenylphosphine oxide, 2-methyl benzoyl diphenylphosphine oxide, versatile diphenylphosphine oxide, 2-methyl-2-ethylhexanoyl diphenylphosphine oxide, 1-methyl-cyclohexanoyl diphenylphosphine oxide, pivaloyl phenylphosphinic acid methyl ester, pivaloyl phenyl phosphinic acid isopropyl ester, 2,4,6-trimethyl benzoyl diphenylphosphine oxide, and the like.

Among the above, 2,4,6-trimethyl benzoyl diphenylphosphine oxide (Lucirin TPO, available from BASF Japan Ltd.) is preferred as the mono acylphosphine oxide compound.

Well-known bis-acylphosphine oxide compounds can be used as the bis-acylphosphine oxide compound. Examples thereof include the bis-acylphosphine oxide compounds as described in JP1991-101686A (JP-H3-101686A), JP1993-345790A (JP-H5-345790A), and JP 1994-298818A (JP-H6-298818A).

Specifically, the bis-acylphosphine oxide compounds include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphtylphosphine oxide, bis(2,6-dichlorobenzoyl)-1-naphtylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl) phenylphosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis (2,6-dicholoro-3,4,5-trimethoxybezoyl-4-ethoxyphenylphosphine oxide, bis(2-methyl-1-naphtoyl)-2,5-dimethylphenylphosphine oxide, bis(2-methyl-1-naphtoyl)-4-ethoxyphenylphosphine oxide, bis(2-methyl-1-naphtoyl)-2-naphtylphosphine oxide, bis(2-methyl-1-naphtoyl)-4-propylphenylphosphine oxide, bis(2-methoxy-1-naphtoyl)-4-ethoxyphenylphosphine oxide, bis(2-chloro-1-naphtoyl)-2,5-dimethylphenylphosphine oxide, bis(2,6-dimethoxybenzoyl)-2,4,4-trimethylpentylphosphine oxide, and the like.

Among the above, bis(2,4,6-trimethylbenzoyl) phenylphosphine oxide (IRGACRUE 819, available from BASF Japan Ltd.), bis(2,6-dilnethoxy benzoyl)-2,4,4-trimethyl pentyl phenylphosphine oxide, and the like are preferred as the bis-acylphosphine oxide compound.

<(Component B-2) thioxanthone compound>

The ink composition that can be used in the invention contains a thioxanthone compound (component B-2) as the radical polymerization initiator (component B).

The magenta ink composition and the cyan ink composition that can be used in the ink set of the invention respectively contain the component B-2 in 0.1% by mass to less than 2% by mass with respect to the total mass of the ink composition.

In addition, the yellow ink composition and the black ink composition that can be used in the ink set of the invention respectively contain the component eB-2 in 2% by mass to less than 6% by mass with respect to the total mass of the ink composition.

Furthermore, the white ink compositions that can be used in the ink set of the invention preferably contain the component B-2 in more than 0% by mass to less than 1% by mass with respect to the total mass of the ink composition or no component B-2.

The other color ink compositions that can be used in the ink set of the invention preferably contain the component B-2 in more than 0% by mass to less than 1% by mass with respect to the total mass of the ink composition or no component B-2, respectively.

The thioxanthone compound is not particularly limited, and well-known compounds can be used, but the thioxanthone compound is preferably a compound represented by the following formula (4).

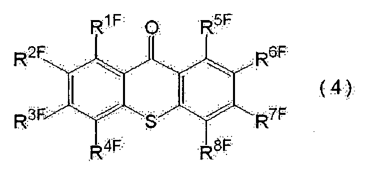

In the formula (4), R^{1F}, R^{2F}, R^{3F}, R^{4F}, R^{5F}, R^{6F}, R^{7F}, and R^{8F}, respectively represent a hydrogen atom, an alkyl group, a halogen atom, a hydroxyl group, a cyano group, a nitro group, an amino group, an alkyl thio group, an alkyl amino group (including the cases of monosubstitution and disubstitution. Meanwhile, the above thing similarly applies in the below.), an alkoxy group, an alkoxy carbonyl group, an acyloxy group, an acyl group, a carboxy group, or a sulfo group. The carbon number of the alkyl portion in the alkyl group, alkyl thio group, alkyl amino group, alkoxy group, alkoxy carbonyl group, acyloxy group, and acyl group is preferably 1 to 20, more preferably 1 to 8, and further preferably 1 to 4,

R^{1F}, R^{2F}, R^{3F}, R^{4F}, R^{5F}, R^{6F}, R^{7F}, and R^{8F} may be bonded with an adjacent one respectively so as to form a ring. When R^{1F}, R^{2F}, R^{3F} R^{4F}, R^{5F} R^{6F}, R^{7F}, and R^{8F} form a ring respectively, the ring structure includes aliphatic rings, aromatic rings, and the like having 5 or 6-membered rings, may be a hetero ring including an element other than a hydrogen atom, and may also form a binuclear ring in which formed rings are combined with each other, for example, a condensed ring. The ring structure may also further have a substituent. The substituent includes a halogen atom, a hydroxyl group, a cyano group, a nitro group, an amino group, an alkylthio group, an alkyl amino group, an alkoxy group, an alkoxy carbonyl group, an acyloxy group, an acyl group, a carboxy group, and a sulfo group. Examples of the hetero atom when the formed ring structure is a hetero ring include N, O, and S.

Examples of the thioxanthone compound include thioxanthone, 2-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-buthoxycarbonylthioxanthone, 3-buthoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxy methylthioxnathone, 2-methyl-6-(1,1-dimethoxybenzyl)thioxanthone, 2-morpholinomethylthioxanthone, 2-methyl-6-morpholinomethylthioxanthone, n-arylthioxnathone-3,4-dicarboximide, n-octylthioxanthone-3,4-dicarboxide, N-(1,1,3,3-tetramethylbutyl)thioxanthone-3,4-dicarboximide, 1-phenoxythioxanthone, 6-ethoxycarbonyl-2-methoxythioxanthone, 6-ethoxycarbonyl-2-methylthioxnathone, thioxanthone-2-polyethylene glycol ester, and 2-hydroxy-3-(3,4-dimethyl-9-oxo-9H-thioxanthone-2-yloxy)-N,N,N-trimethyl-1-propane aminium chloride from the viewpoint of easy procurement or curing properties.

Among the above, thioxanthone, isopropylthioxanthone, 2,3-diethylthioxanthone, 2,4-diethylthioxanthone, 2,4-dichlorothioxanthone, 1-chloro-4-propoxythioxanthone, 2-cyclohexylthioxanthone, and 4-cyclohexylthioxanthone are preferred, isporpoylthioxanthone is more preferred, and 2-isopropylthioxanthone and 4-isopropylthioxnathone are particularly preferred from the viewpoint curing properties and ease of procuring.

The other radical polymerization initiators that can be used in the invention include aromatic ketones, α-amino ketone compounds, aromatic onium salt compounds, organic peroxides, thio compounds, hexaarylbiimidazole compounds, ketoximester compounds, borate compounds, azinium compounds, metallocene compounds, activated ester compounds, compounds having a carbon-halogen bonding, and the like. Specific polymerization initiator includes the radical polymerization initiator as described in JP2008-208190A.

a-hydroxy ketone is preferred as the aromatic ketone, and examples thereof include 1-[4-(2-hydroxyethoxy)-phenyl]-2-hydroxy-2-methyl-1-propane-1-on, 2-hydroxy-2-methyl-1-phenyl-propane-1-on, 1-hydroxy cyclo hexyl phenyl ketone, and the like. Among the above, 1-hydroxyl cyclo hexyl phenyl ketone is preferred. Meanwhile, in the invention, 1-hydroxy cyclo hexyl phenyl ketone includes compounds obtained by substituting 1-hydroxy cyclo hexyl phenyl ketone with an arbitrary substituent. The substituent can be arbitrarily selected in a range in which the compounds can exhibit a capability as a radical polymerization initiator, and specific examples thereof include alkyl groups having a carbon number of 1 to 4.

In addition, the α-amino ketone compound is not particularly limited, and a well-known compound can be used, but it is preferable to use a compound represented by the following formula (5),

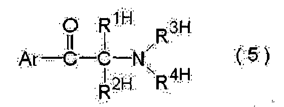

In the formula (5), Ar represents a phenyl group substituted with -SR¹³ or N(R^{7H})(R^{8H}), R¹³ represents a hydrogen atom or an alkyl group, R^{1H} and R^{2H} respectively represent alkyl groups having a carbon number of 1 to 8, R^{3H} and R^{4H} respectively represent a hydrogen atom, alkyl groups having a carbon number of 1 to 12, alkyl groups having a carbon number of 2 to 4 or alkenyl groups having a carbon number of 3 to 5 which are substituted with alkoxy having a carbon number of 1 to 4. R^{1H} and R^{2H} may be bonded with each other so as to compose alkylene groups having a carbon number of 2 to 9. R^{3H} and R^{4H} may be bonded with each other so as to compose alkylene groups having a carbon number of 3 to 7, and the alkylene groups may be alkylene groups including -O- or N(R¹²)- in the alkylene chains. R¹² represents alkyl groups having a carbon number of 1 to 4. R^{7H} and R^{8H} represent a hydrogen atom, an alkyl group having a carbon number of 1 to 12, an alkoxy-substituted having a carbon number of 1 to 4 alkyl group having a carbon number of 2 to 4 or an alkenyl group having a carbon number of 3 to 5 respectively. R^{7H} and R^{8H} may be bonded with each other so as to form alkylene groups having a carbon number of 3 to 7, and the alkylene groups may be alkylene groups including -O- or -N(R¹²)- in the alkylene chains. Here, R¹² is the same as the above.

Examples of the α amino ketone compound include 2-methyl-1-phenyl-2-morpholinopropane-1-on, 2-methyl-1-[4-(hexyl)phenyl]-2-morpholinopropane-1-on, 2-ethyl-2-dimethylamino-1-(4-morpholinophenyl)-butane-1-on, and the like. In addition, preferred examples thereof also include commercially available products, such as IRGACURE 907, IRGACURE 369, IRGACURE 379, and the like, all of which are available from BASF Japan Ltd.

In addition, examples of the sensitizer that can be used as the component B include polynuclear aromatics (for example, pyrene, perylene, triphenylene, 2-ethyl-9,10-dimethoxy anthracene, and the like), xanthenes (for example, fluorescein, eosin, erythroosine, rhodarnine, rose Bengal, and the like), cyanines (for example, thiacarbocyanine, oxacarbocyanine, and the like), merocyanines (for example, merocyanine, carbomerocyanine, and the like), thiaxines (for example, thionine, methylene blue, toluidine blue, and the like), acridines (for example, acridine orange, chloroflavin, acriflavine, and the like), anthraquinones (for example, anthraquinone, and the like), squaryliums (for example, squarylium, and the like), coumarins (for example, 7-diethylamino-4-methyl coumarin and the like), thicoumarins (for example, thicoumarin and the like), and the like. Among the above, thiocoumarins are preferred.

The thiochromanones are not particularly limited, and a well-known thiochromanone can be used, but it is preferable to use a compound represented by the following formula (6).

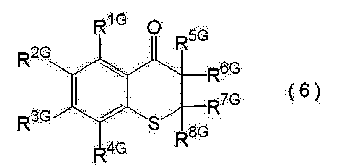

In the formula (6), R^{1G,} R^{2G}, R^{3G}, R^{4G}, R^{5G}, R^{6G}, R^{7G}, and R^{8G} respectively represent a hydrogen atom, an alkyl group, a halogen atom, a hydroxyl group, a cyano group, a nitro group, an amino group, an alkyl thio group, an alkyl amino group, an alkoxy group, an alkoxy carbonyl group, an acyloxy group, an acyl group, a carboxy group, or a sulfo group. The carbon number of the alkyl portion in the alkyl group, alkyl thio group, alkyl amino group, alkoxy group, alkoxy carbonyl group, acyloxy group, and acyl group is preferably 1 to 20, more preferably 1 to 8, and further preferably 1 to 4.

R^{1G}, R^{2G}, R^{3G}, and R^{4G} may be bonded with an adjacent one respectively, for example, may be condensed so as to form a ring.

When R^{1G}, R^{2G}, R^{3G}, R^{4G}, R^{5G}, R^{6G}, R^{7G}, and R^{8G} form a ring respectively, the ring structure includes aliphatic rings, aromatic rings, and the like having 5 or 6-membered rings, may be a hetero ring including an element other than a hydrogen atom, and may also form a binuclear ring in which formed rings are combined with each other, for example, a condensed ring. The ring structure may also further have a substituent. The substituent includes the substituent exemplified as R^{1G} in the formula (6). Examples of the hetero atom when the formed ring structure is a hetero ring include N, O, and S.

In addition, the thiochromanones are preferably compounds having at least one substituent (an alkyl group, a halogen atom, a hydroxyl group, a cyano group, a nitro group, an amino group, an alkyl thio group, an alkyl amino group, an alkoxy group, an alkoxy carbonyl group, an acyloxy group, an acyl group, a carboxy group, a sulfo group, or the like) in the ring structure of thiochromanone. The substituent is preferably an alkyl group, a halogen atom, a hydroxyl group, an alkyl thio group, an alkyl amino group, an alkoxy group, and an acyloxy group, more preferably an alkyl group and a halogen atom having a carbon number of 1 to 20, and further preferably an alkyl group and a halogen atom having a carbon number of 1 to 4.

In addition, the thiochromanones are more preferably compounds having at least one substituent in the aromatic ring and the cyclo hexanone ring respectively.

Specific examples of the thiochromanones preferably include the following (6-1) to (6-31).

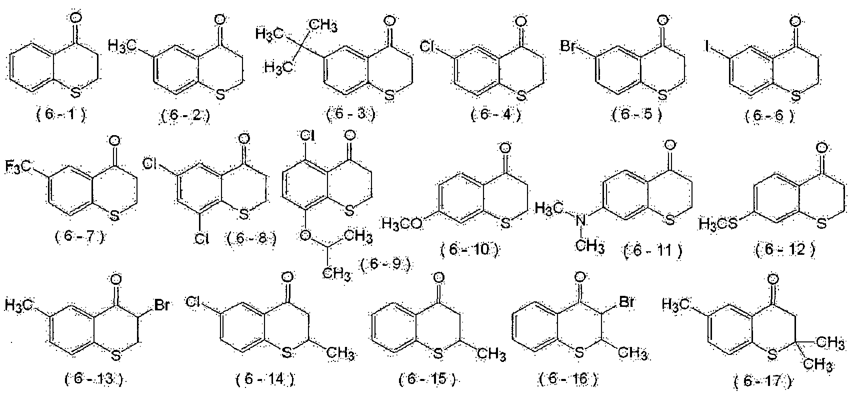

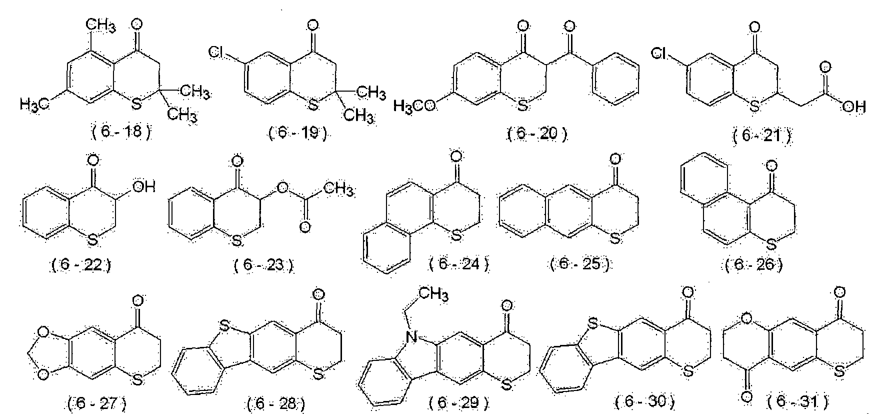

The content of the component B in the ink composition is preferably 0.01 % by mass to 35% by mass, more preferably 0.5% by mass to 20% by mass, and further preferably 1.0% by mass to 15% by mass with respect to the total content of the polymerization compound (component A) from the viewpoint of the curing properties and evenness of the degree of cure in a cured film.

(Component C) Colorant

The coloring ink composition, such as a yellow ink composition, a magenta ink composition, a cyan ink composition, and a black ink composition, in the ink set of the invention contains a colorant (component C). Meanwhile, the ink set of the invention may also include a clear ink composition containing no colorant other than a yellow ink composition, a magenta ink composition, a cyan ink composition, and a black ink composition.

The colorant is not particularly limited, but pigments and oil-soluble dyes having excellent weather resistance and rich color reproducibility are preferred, and well-knawn, colorants, such as soluble dyes, can be arbitrarily selected. It is preferable to select a compound which does not function as a polymerization inhibitor as the colorant from the viewpoint of not degrading the sensitivity of the curing reaction by active radiant rays.

Pigments that can be used in the invention are not particularly limited, and, for example, organic pigments and inorganic pigments having the following numbers described in the color index can be used.

Pigments that can be used according to purpose include Pigment Red 3, 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 202, 208, 216, 226, 257, Pigment Violet 3, 19, 23, 29, 30, 37, 50, 88, Pigment Orange 13, 16, 20, and 36 as red or magenta pigments,
Pigment Blue 1, 15, 15:1, 15:2, 15:3, 15:4, 15:6, 16, 17-1, 22, 27, 28, 29, 36, and 60 as blue or cyan pigments,
Pigment Green 7, 26, 36, and 50 as green pigments,
Pigment Yellow 1, 3, 12, 13, 14, 17, 34, 35, 37, 55, 74, 81, 83, 93, 94, 95, 97, 108, 109, 110, 120, 137, 138, 139, 150, 153, 154, 155, 157, 166, 167, 168, 180, 185, and 193 as yellow pigments,
Pigment Black 7, 28, and 26 as black pigments,
Pigment White 6, 18, and 21 as white pigments, and the like.

In the invention, it is also possible to use a dispersive dye in a range in which the dispersive dye can be dissolved in a hydrophobic organic solvent. Generally, the dispersive dye also includes water-soluble dyes; however, in the invention, it is preferable to use the dispersive dye in a range in which the dispersive dye can be dissolved in a hydrophobic organic solvent.

Specific examples of the preferred dispersive dye include C. I. Disperse Yellow 5, 42, 54, 64, 79, 82, 83, 93, 99, 100, 119, 122, 124, 126, 160, 184; 1, 186, 198, 199, 201, 204, 224, and 237; C. I. Disperse Orange 13, 29, 31:1, 33, 49, 54, 55, 66, 73, 118, 119, and 163; C. I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; C. I. Disperse Violet 33; C. I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and C. I. Disperse Green 6:1 and 9, and the like.

The colorant is preferably added to the ink composition, and then dispersed in the ink composition appropriately. Examples of a dispersing apparatus that can be used for dispersion of the colorant include a ball mill, a sand mill, an attritor, a roll mill, an agitator, a Henschel mixer, a colloid mill, an ultrasonic homogenizer, a pearl mill, a wet jet mill, a paint shaker, and the like.

The colorant may also be directly added together with the respective components when the ink composition is prepared. In addition, in order to improve the dispersibility, the colorant can be added to a solvent or a dispersion medium, such as the polymerizable compound used in the invention, in advance, evenly dispersed or dissolved, and mixed.

In the invention, it is preferable to add the colorant to a dispersion medium, such as the polymerization compound, in advance and mix the two in order to avoid problems of degradation of the solvent resistance and volatile organic compounds (VOC) of a remaining solvent when the solvent remains in cured images. Meanwhile, when only the viewpoint of dispersion adequacy is taken into account, it is preferable to select a monomer having the lowest viscosity as the polymerization compound used for addition of the colorant.

In addition, one or two or more of colorants may be appropriately selected and used according to the intended use of the ink composition.

Meanwhile, when a colorant that is present in the original form of solid (particles) in the ink composition, such as a pigment, is used, it is preferable to select the colorant, a dispersant, and a dispersion medium, and set dispersing conditions and filtering conditions so that the average particle diameter of the colorant particles becomes preferably 0.005 µm to 0.5 pm, more preferably 0.01 µm to 0.45 µm, and further preferably 0.015 µm to 0.4 µm. Such particle diameter management can suppress clogging of nozzle heads, and maintain the storage stability, transparency, and curing sensitivity of the ink composition.

The component C included in the yellow ink composition is preferably at least one colorant selected from a group consisting of C. I. Pigment Yellow 120, 150, 155, and 180.

The component C included in the magenta ink composition is preferably at least one colorant selected from a group consisting of C. I. Pigment Red 122, 202, and C. I. Pigment Violet 19.

The component C included in the cyan ink composition is preferably at least one colorant selected from a group consisting of C. I. Pigment Blue 15:3 and 15:4.

The component C included in the black ink composition is preferably at least one colorant selected from a group consisting of C. I. Pigment Black 7.

The content of the colorant in the ink composition is appropriately selected in consideration of color and intended use, but preferably 0.01% by mass to 30% by mass with respect to the total mass of the ink composition.

(Component D) Dispersant

The ink composition that can be used in the invention preferably contains a dispersant (component D). Particularly when a pigment is used, the ink composition preferably contains a dispersant in order to stably disperse the pigment in the ink composition. The dispersant is preferably a polymer dispersant. Meanwhile, the "polymer dispersant" in the invention refers to a dispersant having a mass average molecular weight of 1,000 or more.

Polymer dispersants include DISPERBYK-101, DISPERBYK-102, DISPERBYK-103, DISPERBYK-106, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, DISPERBYK-182 (available from BYK-Chemie, Japan K.K.); EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, EFKA7580 (available from EFKA Additives B.V.), Disperse Aid 6, Disperse Aid 8, Disperse Aid 15, Disperse Aid 9100 (available from San Nop Co., Ltd.); a variety of SOLSPERSE dispersants (available from Noveon Incorporated), such as SOLSPERSE 3000, 5000, 9000, 12000, 13240, 13940, 17000, 22000, 24000, 26000, 28000, 32000, 36000, 39000, 41000, and 71000; ADEKA Pluronic L31, F38, L42, L44, L61, L64, F68, L72, P95, F77, P84, F87, P94, L101, P103, F108, L121, P-123 (available from ADEKA Corporation), IONET S-20 (available from Sanyo Chemical Industries, Ltd.); DISPARON KS-860, 873SN, 874 (polymer dispersant), #2150 (aliphatic multivalent carboxyl acid), #7004 (polyether ester-type) (available from Kusumoto Chemicals, Ltd.); and TEGO DISPERS 685 (available from Evonik Degussa Japan Co., Ltd.).

The content of the dispersant in the ink composition is appropriately selected according to intended use, but is preferably 0.05% by mass to 15% by mass with respect to the mass of the entire ink composition.

(Component E) Oligomer

The ink composition that can be used in the invention preferably contains an oligomer (component E).

The oligomer is a polymer in which, generally, a limited number of monomers (in general, 5 to 100 monomers) are bonded, and a well-known compound called an oligomer can be arbitrarily selected; however, in the invention, it is preferable to select a polymer having a mass average molecular weight of 400 to 10,000 (more preferably 500 to 5,000).

The oligomer may also have a radical polymerizable group. As the radical polymerizable group, an ethylenic unsaturated group is preferred, and (meth)acryloxy group is more preferred.

The oligomer in the invention may be any oligomer, but examples thereof include olefin-based oligomers (ethylene oligomer, propylene oligomer, butane oligomer, and the like), vinyl-based oligomers (styrene oligomer, vinyl alcohol oligomer, vinyl pyrrolidone oligomer, acrylate oligomer, methacrylate oligomer, and the like), diene-based oligomers (butadiene oligomer, chloroprene rubber, pentadiene oligomer, and the like), ring-opening polymerization system (di-, tri-, tetraethylene glycol, polyethylene glycol, polyethyl imine, and the like), polyaddition system (oligoester (meth)acrylate, polyamide oligomer, polyisocyanate oligomer), and addition-condensed oligomers (a phenol resin, an amino resin, a xylene resin, a ketone resin, and the like). Among them, oligoester (meth)acrylates are preferred, among oligoester (meth)acrylates, urethane (meth)acrylate, polyester (meth)acrylate, and epoxy (meth)acrylate are more preferred, and urethane (meth)acrylate is further preferred.

Urethane (meth)acrylate preferably includes aliphatic urethane (meth)acrylate, aromatic urethane (meth)acrylate, and more preferably includes aliphatic urethane (meth)acrylate.

In addition, urethane (meth)acrylate is preferably tetrafunctional or less urethane (meth)acrylate, and more preferably bifunctional or less urethane (meth)acrylate.

An ink composition having excellent adhesiveness with a base material and excellent curing properties can be obtained by containing urethane (meth)acrylate.

Regarding the oligomer, it is also possible to reference "Oligomer Handbook" (edited by Jyunji Yosikawa, printed by The Chemical Daily Co., Ltd.).

In addition, examples of the commercially available oligomers include the following oligomers.

Examples of the urethane (meth)acrylate include R1204, R1211, R1213, R1217, R1218, R1301, R1302, R1303, R1304, R1306, R1308, R1901, R1150, and the like, available from Dai-Ichi Kogyo Seiyaku Co., Ltd.; EBECRYL series (for example, EBECRYL 230, 270, 4858, 8402, 8804, 8807, 8803, 9260, 1290, 1290K, 5129, 4842, 8210, 210, 4827, 6700, 4450, and 220), available from Daicel-Cytec Company Ltd.; NK oligomer U-4HA, U-6HA, U-15HA, U-108A, U200AX, and the like, available from Shin-Nakamura Chemical Co., Ltd.; ARONICS M-1100, M-1200, M-1210, M-1310, M-1600, M-1960, and the like, available from Toagosei Chemical Industry Co., Ltd.

Examples of the polyester (meth)acrylate include EBECRYL series (for example, EBECRYL 770, IRR 467, 81, 84, 83, 80, 675, 800, 810, 812, 1657, 1810, IRR 302, 450, 670, 830, 870, 1830, 1870, 2870, IRR 267, 813, IRR 483, 811, and the like), available from Daicel-Cytec Company Ltd.; ARONICS M-6100, M-6200, M-6250, M-6500, M-7100, M-8030, M-8060, M-8100, M-8530, M-8560, M-9050 and the like, available from Toagosei Chemical Industry Co., Ltd.

In addition, examples of the epoxy (meth)acrylate include EBECRYL series (for example, EBECRYL 600, 860, 2958, 3411, 3600, 3605, 3700, 3701, 3703, 3702, 3708, RDX 63182, 6040, and the like), available from Daicel-Cytec Company Ltd.

The oligomer may be used singly or in combination of two or more kinds.

The content of the oligomer in the ink composition is preferably 0.1% by mass to 50% by mass, more preferably 0.5% by mass to 20% by mass, and further preferably 1% by mass to 10% by mass with respect to the total mass of the ink composition.

(Component F) Radical polymerization inhibitor

The ink composition that can be used in the invention preferably contains a radical polymerization inhibitor from the viewpoint of the storage stability and suppression of head clogging.

The content of the radical polymerization inhibitor is preferably 200 ppm to 20,000 ppm with respect to the total mass of the ink composition.

The radical polymerization inhibitor includes nitroso-based polymerization inhibitors, hindered amine-based polymerization inhibitors, hydroquinone, benzoquinone, p-methoxyphenol, TEMPO, TEMPOL, cupferron Al, and the like.

(Component G) Surfactant

A surfactant may be added to the ink composition that can be used in the invention in order to supply ejecting properties that are stable for a long time.

However, from the viewpoint of the glossiness and suppression of band variation, each of the respective ink compositions preferably contains no silicone-based surfactant or fluorine-based surfactant or contains a silicone-based surfactant or fluorine-based surfactant in a total content of more than 0% by mass to 0.03% by mass with respect to the total mass of the ink composition, more preferably contains no silicone-based surfactant or fluorine-based surfactant or contains a silicone-based surfactant or fluorine-based surfactant in a total content of more than 0% by mass to 0.005% by mass, and further preferably contains no silicone-based surfactant or fluorine-based surfactant.

Meanwhile, in addition to the silicone-based surfactant and fluorine-based surfactant, the surfactant includes the surfactants as described in JP1987-173463A (JP-S62-173463A) and JP1987-183457A (JP-S62-183457A). Examples thereof include anionic surfactants, such as dialkylsulfosuccinates, alkyl naphthalene sulfonates, and fatty acid salts; nonionic surfactants, such as polyoxyethylene alkyl ethers, polyoxyethylene alkyl arylethers, acetylene glycols, and polyoxyethylene-polyoxypropylene block copolymers; and cationic surfactants, such as alkyl amine salts and quarternary ammonium salts.

<Other components>

The ink composition that can be used in the invention may include, in addition to the respective components, a co-sensitizer, an ultraviolet absorbing agent, an oxidation inhibitor, a discoloration inhibitor, conductive salts, a solvent, a polymer compound, a basic compound and the like according to necessity. Well-known components can be used as the other components, and examples of the other components include the components as described in JP2009-221416A.

<Ink properties>

In the invention, it is preferable to use an ink composition whose viscosity at 25 °C is 40 mPa·s or less in consideration of the ejecting properties. The viscosity of the ink composition is more preferably 5 mPa·s to 40 mPa·s, and further preferably 7 mPa·s to 30 mPa·s. In addition, the viscosity at an ejecting temperature (preferably 25 °C to 80 °C, and more preferably 25 °C to 50 °C) is preferably 3 mPa·s to 15 mPa·s, and more preferably 3 mPa·s to 13 mPa·s. The ink composition preferably has a composition ratio of the respective components appropriately adjusted so that the viscosity becomes in the above range. Setting the viscosity at room temperature (25 °C) to high can avoid intrusion of the ink composition into a recording medium and reduce uncured monomers even when a porous recording medium (supporting body) is used. Furthermore, setting the viscosity at room temperature to high is preferred since ink soaking can be suppressed when droplets of the ink composition are dropped, and, consequently, images are improved.

The surface tension of the ink composition at 25 °C is preferably 20 mN/m to 40 mN/m, more preferably 28 mN/m to 37 mN/m, and particularly preferably 30 mN/m to 33 mN/m. With the surface tension in the above ranges, a printed object having superior glossiness and unnoticeable band variation can be obtained.

(Ink jet recording method, ink jet recording apparatus, and printed object)

The ink jet recording method of the invention is an ink jet recording method in which the ink set of the invention is used, and preferably a method in which the ink set of the invention is used, an ink composition is ejected on a recording medium (supporting body, recording material, or the like) for ink j et recording, and active energy rays are irradiated to the ink composition ejected on the recording medium, thereby curing the ink and forming images.

Meanwhile, an "image" in the invention includes not only objects having meanings respectively, such as letters, symbols, figures, but also objects having no meaning, such as shapes and full page coloring.

More specifically, the ink jet recording method of the invention uses the ink set of the invention, and preferably includes (a) a process in which an ink composition is ejected on a recording medium, and (b) a process in which active energy rays are irradiated to the ejected ink composition so as to cure the ink composition. The ink jet recording method of the invention includes the processes (a) and (b) so as to form images using the ink composition cured on the recording medium.

The ink jet recording apparatus of the invention is an ink jet recording apparatus provided with the ink set of the invention, and well-known ink jet recording apparatuses can be arbitrarily selected and used as long as the apparatuses are provided with the ink set of the invention.

In addition, the printed object of the invention is a printed object obtained using the ink set of the invention, and a printed object recorded by the ink jet recording method of the invention.

An ink jet recording apparatus as described below can be used in the process (a) in the ink jet recording method of the invention.

Examples of the ink jet recording apparatus of the invention include an apparatus including an ink supplying system, a temperature sensor, and an active energy ray source.

The ink supplying system is composed of, for example, an original tank including an ink composition, a supplying pipe, an ink supplying tank immediately ahead of an ink jet head, a filter, and the piezo-type ink jet head. The piezo-type ink jet head can be driven so as to eject multi-size dots of preferably 1 pl to 100 pl, and more preferably 8 pl to 30 pl at a resolution of 320 × 320 dpi to 4,000 × 4,000 dpi, more preferably 400 × 400 dpi to 1,600 × 1,600, and further preferably 720 × 720 dpi. Meanwhile, the 'dpi' in the invention represents the number of dots per inch (2.54 cm).

As described above, since it is preferable to maintain the ejected ink composition at a constant temperature, the ink jet recording apparatus is preferably provided with a means for stabilizing the temperature of the ink composition. The portions maintained at a constant temperature are the pipe system from an ink tank (an intermediate tank when the intermediate tank is present) to a nozzle emitting face, and the entire members. That is, it is possible to thermally insulate and heat a portion from the ink supplying tank to the ink jet head.

A method of controlling the temperature is not particularly limited; however, for example, it is preferable to provide a plurality of temperature sensors at each of the pipe portions and control heating in accordance with the ink flux and the environment temperature. The temperature sensors can be provided in the vicinity of the ink supplying tank and the nozzles of the ink jet heads. In addition, it is preferable that a head unit to be heated be thermally blocked or thermally insulated so as not to be affected by the temperature of external air. It is preferable to thermally insulate the head unit to be heated from other portions, and decrease the heat capacity of the entire heating unit in order to shorten the duration for starting a printer necessary for heating or decrease the loss of thermal energy.

Ejection of the ink composition using the ink jet recording apparatus is preferably carried out after the ink composition is heated to preferably 25 °C to 80 °C, and more preferably 25 °C to 50 °C so as to decrease the viscosity of the ink composition to preferably 3 spa to 15 mPa·s, and more preferably 3 mPa·s to 13 mPa·s. Particularly, it is preferable to use an ink composition having an ink viscosity at 25 °C of 50 mPa·s or less since ejection is preferably carried out. Use of this method can realize favorable ejection stability.

Since a radiation curable ink composition like the ink composition used in the invention generally has a higher viscosity than an ordinary aqueous ink used in an ink jet recording ink, the change in the viscosity due to the change in the temperature during ejection is large. The viscosity change of the ink has significant influences on the change in the sizes of liquid droplets and the change in liquid droplet-ejecting speed, and, furthermore, causes degradation of image quality. Therefore, it is necessary to maintain the temperature of the ink during ejection as constant as possible. As a result, in the invention, the allowance of the ink temperature is preferably ±5 °C of a setting temperature, more preferably ±2 °C of a setting temperature, and further preferably ±1 °C of a setting temperature.

Next, the process (b) in which active energy rays are irradiated to the ejected ink composition so as to cure the ink composition of the invention will be described.

The ink composition ejected on a recording medium is cured by irradiating active energy rays. This is because the radical polymerization initiator included in the ink composition is decomposed by irradiation of active energy rays so as to generate radical polymerization initiating kinds, such as radicals, and the functions of the initiating kinds initiate and accelerate the polymerization reaction of a polymerizable compound. At this time, when a sensitizer is present in the ink composition together with a radical generator, the sensitizer in the system absorbs active energy rays so as to be in an excited state, and comes into contact with the radical generator so as to accelerate decomposition of the radical generator, whereby a curing reaction with a higher sensitivity can be achieved.

The active energy rays used herein include an α ray, a γ ray, an electron ray, an X ray, an ultraviolet ray, visible light, infrared light, and the like. The peak wavelength of the active energy rays is also dependent on the absorbing characteristics of a sensitizer; however, for example, preferably 200 nm to 600 nm, more preferably 300 nm to 450 nm, further preferably 320 nm to 420 nm, and particularly preferably 340 nm to 400 nm, which belongs to the range of an ultraviolet ray.

In addition, the polymerization initiating system of the ink composition that can be used in the invention has a sufficient sensitivity even with respect to a low-output active energy ray. Therefore, it is appropriate to carry out curing with an illuminance of the exposed face of preferably 10 mW/cm² to 4,000 mW/cm², and more preferably 20 mW/cm² to 2,500 mW/cm².

A mercury lamp, a gas·solid laser, and the like are mainly used as the active energy ray source, and a mercury lamp and a metal halide lamp are widely known as a light source used for curing an ink composition for ultraviolet curable ink jet recording. However, there is a strong demand for not using mercury from the viewpoint of current environment protection, and substitution into a GaN-based semiconductor ultraviolet-emitting device is extremely useful in industrial and environmental senses. Furthermore, LED (UV LED) and LD (UV-LD) have a small size, a long service life, a high efficiency, and a low cost, and are expected as a light curable inkjet light source.

In addition, a light-emitting diode (LED) and a laser diode (LD) can be used as an active energy ray source. Particularly, when an ultraviolet ray source is required, an LED and an ultraviolet LD can be used. For example, Nichia Corporation has released to the market a violet LED the main emitted spectrum of which has a wavelength between 365 nm and 420 nm. Furthermore, when a shorter wavelength is required, the specification of U.S. Patent No. 6,084,250 discloses an LED that can emit active energy rays having the center between 300 nm and 370 nm. In addition, other ultraviolet LEDs can also be obtained, and radiation having a different ultraviolet band can be irradiated. The particularly preferred active energy ray source in the invention is an UV-LED, and particularly preferably an UV-LED having a peak wavelength of 340 nm to 400 nm.

Meanwhile, the maximum illuminance of the LED on a recording medium is preferably 10 mW/cm² to 2,000 mW/cm², more preferably 20 mW/cm² to 1,000 mW/cm², and particularly preferably 50 mW/cm² to 800 mW/cm².

The ink composition is appropriately irradiated by the above active energy rays for preferably 0.01 seconds to 12 seconds, and more preferably for 0.1 seconds to 90 seconds.

The irradiation conditions of active energy rays and a basic irradiating method are disclosed in JP1985-132767A (JP-S60-132767A). Specifically, irradiation is carried out by providing light sources on both sides of a head unit including an apparatus of ejecting an ink composition, and scanning the head unit and the light sources in a so-called shuttle mode. The irradiation of active energy rays is carried out for a certain duration (preferably 0.01 seconds to 0.5 seconds, more preferably 0.01 seconds to 0.3 seconds, and further preferably 0.01 seconds to 0.15 seconds) after the ink composition is dropped. Controlling the duration from the dropping of the ink composition to the irradiation to an extremely short duration can prevent the ink composition dropped on a recording medium from being soaked before being cured. In addition, since the ink composition can be exposed before the ink composition intrudes into a deep portion where the light sources do not reach even when the ink composition is ejected to a porous recording medium, it is possible to suppress uncured monomers from remaining.

Furthermore, curing may be completed by a separate light source unaccompanied by driving. The pamphlet of International Publications No 99/54415 discloses as irradiating methods a method in which an optical fiber is used or a method in which UV light is irradiated to a recording portion by hitting a collimated light source to a mirror face provided on the side face of the head unit, and such curing methods can be applied to the ink jet recording method of the invention.

Employing the ink jet recording method as described above can maintain the constant dot diameter of the dropped ink composition even on a variety of recording media having different wetting properties on the surface so as to improve image qualities. Meanwhile, it is preferable to sequentially overlap ink compositions from a color having the lowest brightness in order to obtain color images. Since sequentially overlapping ink compositions from the lowest brightness facilitates irradiated rays to reach the bottom portion of the ink compositions, degradation of the curing sensitivity of the ink composition can be suppressed. In addition, a decrease in remaining monomers and improvement of the adhesiveness can be expected for obtained images. In addition, irradiation can be carried out by ejecting and collectively exposing all colors, but exposing the color one by one is preferred from the viewpoint of curing acceleration.

The ink composition that can be used in the invention can be cured with a high sensitivity by irradiation of active energy rays in the above manner, thereby forming images on the surface of a recording medium.

In the inkjet recording method of the invention, the order of the respective coloring ink compositions to be ejected is not particularly limited, but preferably to supply from a coloring ink composition having the lowest brightness to a recording medium, and preferably to supply ink compositions to a recording medium in the order of yellow, cyan, magenta, and black. In addition, when white is added to the above, it is preferable to supply ink compositions in the order of white, yellow, cyan, magenta, and black. Furthermore, the invention is not limited thereto, and it is also possible to preferably use the ink set of the invention which includes at least a total of 7-color ink compositions of yellow, light cyan, light magenta, cyan, magenta, gray, black, and white. In such a case, it is preferable to supply ink compositions to a recording medium in the order of white, light cyan, light magenta, yellow, cyan, magenta, and black.

In the invention, the recording medium is not particularly limited, and well-known recording media can be used as a supporting body or a recording material. Examples thereof include paper, plastic (for example, polyethylene, polypropylene, polystyrene, and the like)-laminated paler, metal (for example, aluminum, zinc, copper, and the like) sheets, plastic (for example, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, and the like) films, the above metal-laminated or deposited paper or plastic films, and the like. In addition, it is possible to preferably use a non-absorbent recording medium as the recording medium in the invention.

### [Examples]

Hereinafter, examples and comparative examples will be shown, and the invention will be described more specifically. However, the invention is not limited to the examples.

Meanwhile, in the following description, the "parts" refers to "parts by mass" unless otherwise described.

Materials of the ink compositions used in the examples and the comparative examples are as follows:
- NOVOPERM YELLOW H2G (yellow pigment, C. I. Pigment Yellow 120, available from Clariant (Japan) K.K.)
- CROMOPHTAL YELLOW LA (yellow pigment, C. I. Pigment Yellow 150, available from BASF Japan Ltd.)
- NOVOPERM YELLOW 4G01 (yellow pigment, C. I. Pigment Yellow 155, available from Clariant (Japan) K.K.)
- NOVOPERM YELLOW PHG (yellow pigment, C. I. Pigment Yellow 180, available from Clariant (Japan) K.K.)
- INKJET MAGENTA E5B02 (magenta pigment, C. I. Pigment Violet 19, available from Clariant (Japan) K.K.)
- INKJET MAGENTA E02 (magenta pigment, C. I. Pigment Violet 122, available from Clariant (Japan) K.K.)
- CINQUASIA MAGENTA RT-355D (a mixed crystal of magenta pigment, C. I. Pigment Violet 19 and C. 1. Pigment Violet 202, available from BASF Japan Ltd.)
- IRGALITTE BLUE GLO (cyan pigment, C. I. Pigment Blue 15:3, available from BASF Japan Ltd.)
- IRGALITTE BLUE GLVO (cyan pigment, C. I. Pigment Blue 15:4, available from BASF Japan Ltd.)
- SPECIALL BLACK 250 (black pigment, C. I. Pigment Black 7, available from Evonik Degussa Japan Co., Ltd.)
- KRONOS 2300 (white pigment, C. 1. Pigment White 6, available from Kronos)
- SOLSPERSE 22000 (pigment dispersant, available from Lubrizol Corporation)
- SOLSPERSE 32000 (pigment dispersant, available from Lubrizol Corporation)
- SOLSPERSE 41000 (pigment dispersant, available from Lubrizol Corporation)
- DISPERBYK-168 (pigment dispersant, solid solution content 30%, available from BYK-Chemie, Japan K.K.)
- TEGO DISPERS 685 (pigment dispersant, available from Evonik Degussa Japan Co., Ltd.)
- SR506D (isobonyl acrylate, available from Sartomer Japan Inc.)
- SR531 (cyclic trimethylol-propane formal acrylate, CTFA, available from Sartomer Japan Inc.)
- NVC (N-vinylcaprolactam, available from BASF Japan Ltd.)
- SR395 (isodecyl acrylate, available from Sartomer Japan Inc.)
- RAP I-CURE DVE-3 (triethylene glycol divinylether, available from ISP Japan Ltd.)
- SR339A (2-phenoxyethyl acrylate, available from Sartomer Japan me.) FA-512AS (dicyclo pentenyloxy ethyl acrylate, available from Hitachi Chemical Co., Ltd.)
- SR9003 (propoxylated (II) neopentyl glycol diacrylate (a compound obtained by forming an adduct of 2 moles of neopentyl glycol propylene oxide into a diacrylate), available from Sartomer Japan Inc.)
- SR341 (3-methyl-1,5-pentanediol diacrylate, available from Sartomer Japan Inc.)
- SR508 (dipropylene glycol acrylate, available from Sartomer Japan Inc.)
- SR454 (ethoxified (III) trimethylol propane triacrylate, available from Sartomer Japan Inc.)
- CN964A85 (urethane acrylate oligomer, average number of functional groups: 2, available from Sartomer Japan Inc.)

- Lucirin TPO (photopolymerization initiator, 2,4,6-trimethylbenzoyl diphenylphosphine oxide, available from BASF Japan Ltd.)
- IRGACURE 819 (photopolymerization initiator, bis(2,4,6-trimethylbenzoyl) phenylphosphine oxide, available from BASF Japan Ltd.)
- Benzophenone (photopolymerization initiator, available from Wako Pure Chemical Industries, Ltd.)
- IRGACURE 184 (photopolymerization initiator, 1-hydroxy cyclohexyl phenylketone, available from BASF Japan Ltd.)
- IRGACURE 369 (photopolymerization initiator, 2-benzyl-2-dimethylamino-1-(4-morpholinophenyl)-butanone-1, available from BASF Japan Ltd.)
- FIRSTCURE ITX (isopropyl thioxanthone, available from ChemFirst Inc.)
- KAYARAD DETX-S (2,4-diethyl thioxanthone, available from Nippon Kayaks Co., Ltd.)
- Thiochromanone compound (1) (the following compound)
- FIRSTCURE ST-1 (polymerization inhibitor, available from ChemFirst Inc

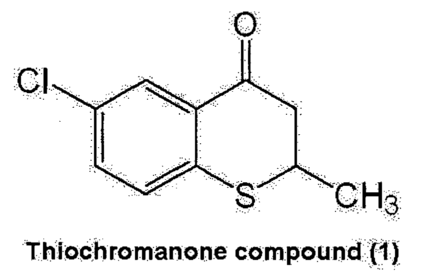

< Preparation of mill bases>

The mill base of each of cyan, yellow, magenta, black, and white was mixed according to the composition in Table 1, and stirred at 2,500 rotations/minute for 10 minutes using a mixer (L4R available from Silverson machines, Inc.). After that, the mill base was fed into a bead mill disperser DISPERMAT LS (available from VMA Getzmann GmbH), and dispersed at 2,500 rotationslminute for 6 hours using YTZ balls (available from Nikkato Corporation) having a diameter of 0.65 mm.

**[Table 1]**

| Unit parts | Mill Base | | | | | | | | | | |
|---|---|---|---|---|---|---|---|---|---|---|---|
| | Yellow | | | | Magenta | | | Cyan | | Black | White |
| | YM1 | YM2 | YM3 | YM4 | MM1 | MM2 | MM3 | CM1 | CM2 | KM1 | WM1 |
| NOVOPERM YELLOW 4G01 | 29.7 | - | - | - | - | - | - | - | - | - | - |
| NOVOPERM YELLOW H2G | - | 29.7 | - | - | - | - | - | - | - | - | - |
| CROMOPHTAL YELLOW LA | - | - | 29.7 | - | - | - | - | - | - | - | - |
| NOVOPERM YELLO PHG | - | - | - | 30.0 | - | - | - | - | - | - | - |
| GINQUASIA MAGE NTART-355D | - | - | - | - | 30.0 | - | - | - | - | - | - |
| INK JET MAGENTA E02 | - | - | - | - | - | 30.0 | - | - | - | - | - |
| INK JET MAGENTA E5B02 | - | - | - | - | - | - | 30.0 | - | - | - | - |
| IRGALITE DLUE GLVO | - | - | - | - | - | - | - | 30.0 | - | - | - |
| IRGALITE 13LUE GLO | - | - | - | - | - | - | - | - | 30.0 | - | - |
| SPECIAL BLACK 250 | - | - | - | - | - | - | - | - | - | 400 | - |
| KRONOS 2300 | - | - | - | - | - | - | - | - | - | - | 500 |
| SOLSPERSE 22000 | 1.6 | - | - | 3.5 | - | - | - | - | - | - | - |
| SOLSPERSE 32000 | - | 15.9 | 15.9 | - | 104 | - | - | 10.0 | 10.0 | 10.0 | - |
| SOLSPERSE 41000 | - | - | - | - | - | - | - | - | - | - | 3.5 |
| DISPERBYK-168 | 28.0 | - | - | 30.0 | - | - | - | - | - | - | - |
| TEGO DISPERSE 685 | - | - | - | - | - | 20.0 | 20.0 | - | - | - | - |
| SR9003 | - | 53.4 | 53.4 | 35.5 | 58.6 | - | - | 59.0 | 59.0 | 49.0 | 45.5 |
| SR339A | 39.7 | - | - | - | - | 49.0 | 49.0 | - | - | - | - |
| FIRSTCURE ST-1 | 1.0 | 1.0 | 1.0 | 1.0 | 1.0 | 1.0 | 1.0 | 1.0 | 1.0 | 1.0 | 1.0 |

### <Preparation of ink compositions>

The compositions in Table 2 were stirred at 2,500 rotations/minute for 15 minutes using a mixer (L4R available from Silverson machines, Inc.). After that, the compositions were filtered using a cartridge filter (product name: Profile II AB01A01014J), available from Pall Corporation, Japan, so as to obtain ink compositions of the respective colors.

The viscosities at 25 °C measured by using TVE-22LT, available from Toki Sangyo Co., Ltd. and the surface tensions measured by using an automatic surface tensiometer CBVP-Z, available from Kyowa Interface Science Co., Ltd. are shown in Table 2.

**[Table 2]**

| Unit: parts | Yellow ink | Magenta ink | Cyan ink | Black ink | White ink |
|---|---|---|---|---|---|
| | Y1 | M1 | Cl | K1 | W1 |
| Yellow mill base YM1 | 8.0 | - | - | - | - |
| Magenta mill base MM1 | - | 16.0 | - | - | - |
| Cyan mill base CM1 | - | - | 8.6 | - | - |
| Black mill base KM1 | - | - | - | 9.0 | - |
| White mill base WM1 | - | - | - | - | 30.0 |
| SR506D | 33.7 | 37.3 | 38.6 | 35.0 | - |
| NVC | 13.9 | 13.8 | 13.8 | 13.9 | 19.5 |
| SR395 | 11.9 | 11.3 | 12.5 | 11.2 | - |
| SR341 | 8.6 | 1.5 | 1.8 | 1.8 | - |
| RAPI-CURE DVE-3 | 3.2 | 3.2 | 3.2 | 3.2 | - |
| SR339A | - | - | - | - | 20.5 |
| SR454 | - | - | - | - | 6.2 |
| SR9003 | - | - | - | - | 3.0 |
| CN964A85 | 4.6 | - | 4.6 | 4.6 | - |
| IRGACURE 184 | 3.0 | 4.0 | 3.0 | 3.0 | 4.0 |
| Lucirin TPO | 9.5 | 8.5 | 9.5 | 9.9 | 5.3 |
| IRGACURE 819 | - | 3.2 | 3.2 | 3.2 | 3.2 |
| FIRSTCURE ITX | 3.2 | 0.8 | 0.8 | 4.8 | 0.3 |
| Thiochrom anone compound (1) | - | - | - | - | 7.7 |
| FIRSTCURE ST-1 | 0.4 | 0.4 | 0.4 | 0.4 | 0.3 |
| Viscosity (mPa·s) | 17.8 | 19.0 | 16.8 | 17.2 | 19.5 |
| Surface tension (mN/m) | 31.1 | 31.0 | 31.1 | 31.2 | 36.6 |

(Example 1)

An ink set 1 composed of yellow ink 1, magenta ink 1, cyan ink 1, black ink 1, and white ink 1 was filled in a UV ink jet printer Luxel Jet UV350GTW, available from Fuji Film Corporation, a test image was printed in a quality mode on a coated paper (product name: OK top coat +), available from Oji Paper Co., Ltd., and evaluation was carried out. The results are shown in Table 7.

<Evaluation of curing properties>

The curing properties were evaluated using the following criteria based on the felt stickiness on the surfaces of printed objects and the presence or absence of the transfer of image portions when printed objects were overlapped and idle to stand for one day.
A: there were no stickiness felt on the surfaces of printed objects and no transfer.
B: there was slight stickiness felt on the surfaces of printed objects, but no transfer.
C: there was slight stickiness felt on the surfaces of printed objects, and slight transfer occurred.
D: the surfaces of printed objects were extremely sticky, and severe transfer occurred.

<Hue change >

The hues (CIELAB) of red (a yellow concentration of 100% and a magenta concentration of 100% were set), green (a yellow concentration of 100% and a cyan concentration of 100% were set), and blue (a cyan concentration of 100% and a magenta concentration of 100% were set) immediately after printing were measured under conditions of a measuring light source of D50, a view angle of 2°, and a color concentration of ANSI Status T using a Spectrolino, available from GreatagMacbeth GmbH. After printed objects were placed at dark places for 2 hours, the hues were measured in the same manner, and the hue changes of the respective colors between immediately after printing and two hours after printing (ΔE = [ (L_{immediately after printing} - L_{2 hours after printing})² + (a* _{immediately after printing} - a* 2 hours after _{printing})^{2 +} (b*_{immediately afterprinting} - b*_{2 hours after printing} )²]^{1/2}) were obtained. When the ΔE is 2 or less, human eyes cannot observe a change in color tone, and color-matching works are left untouched.

<Banding evaluation>

Ten evaluators observed printed objects at a distance of 50 cm, and evaluated the presence and absence of bandings.
A: All evaluators answered that no banding was observed.
B: One to three evaluators from ten answered that banding was observed.
C: Four to six evaluators from ten answered that banding was observed.
D: Seven or more evaluators from ten answered that banding was observed.

<Glossiness evaluation>

The gloss level of the composite black (the respective concentrations of yellow, magenta, cyan, and black were set to 100%) was obtained by measuring the 60° glossiness using a glossimeter, available from Konica Minolta Sensing Inc., (product name: GM-60). As the value increases, the glossiness increases, and clear printed objects can be obtained.

(Examples 2 to 13)

The respective ink compositions in Tables 3 to 5 were manufactured in the same manner as the preparation of the above ink composition, and the ink sets as described in Table 7 were evaluated in the same manner as in Example 1. The results are collectively shown in Table 7.

(Comparative examples 1 to 14)

The respective ink compositions in Tables 3 to 5 were manufactured in the same manner as the preparation of the above ink composition, and the ink sets as described in Table 8 were evaluated in the same manner as in Example 1. The results are collectively shown in Table 8.

**[Table 3]**

| Umt parts | Yellow ink | | | | | | | | | Comparative yellow mk | |
|---|---|---|---|---|---|---|---|---|---|---|---|
| | Y2 | Y3 | Y4 | Y5 | Y6 | Y7 | Y8 | Y9 | Y10 | YCl | YC2 |
| Yellow mill base YM1 | - | - | - | 80 | 80 | 80 | 80 | 80 | 80 | 80 | 80 |
| Yellow mill base YM2 | 8.0 | - | - | - | - | - | - | - | - | - | - |
| Yellow mill base YM3 | - | 80 | - | - | - | - | - | - | - | - | - |
| Yellow mill base YM4 | - | - | 8.0 | - | - | - | - | - | - | - | - |
| SR506D | 33.7 | 33.7 | 33.7 | - | 9.5 | 20.0 | - | 13.7 | 33.7 | 33.7 | 33.7 |
| SR531 | - | - | - | 58.2 | 52.2 | 13.7 | - | - | - | - | - |
| NVC | 13.9 | 13.9 | 13.9 | 3.5 | - | 13.9 | - | 13.9 | 13.9 | 13.9 | 13.9 |
| FA-512AS | - | - | - | - | - | - | 33.7 | - | - | - | - |
| SR395 | 11.9 | 11.9 | 11.9 | - | - | 11.9 | 11.9 | 11.9 | 11.9 | 11.9 | 11.9 |
| SR341 | 7.6 | 7.6 | 7.6 | 10.0 | 10.0 | 7.6 | - | 7.6 | 76 | 7.6 | 76 |
| RAPI-CURE DVE-3 | 3.2 | 3.2 | 3.2 | 3.2 | 3.2 | 3.2 | 3.2 | 3.2 | 3.2 | 3.2 | 3.2 |
| SR339A | - | - | - | - | - | - | 13 9 | - | - | - | - |
| SR9003 | - | - | - | - | - | - | - | 20 0 | - | - | - |
| IRGACURE 184 | 3.0 | 3.0 | 3.0 | 3.0 | 30 | 3.0 | 30 | 3.0 | 3.0 | 3.0 | 3.0 |
| CN964A85 | 4.6 | 4.6 | 4.6 | - | - | 4.6 | 4.6 | 4.6 | 4.6 | 46 | 46 |
| Lucirin TPO | 9.5 | 9.5 | 9.5 | 9.5 | 9.5 | 9.5 | 9.5 | 9.5 | 9.5 | 9.5 | - |
| IRGACURE 819 | 1.0 | 1.0 | 1.0 | 1.0 | 1.0 | 1 0 | 1.0 | 1.0 | 1 0 | 4.2 | - |
| FIRSTCURE ITX | 3.2 | 3.2 | 3.2 | 3.2 | 3.2 | 3.2 | 3.2 | 3.2 | - | - | 32 |
| KAYARAD DETX-S | - | - | - | - | - | - | - | - | 3 2 | - | - |
| IRGACURE 369 | - | - | - | - | - | - | - | - | - | - | 4.5 |
| Benzophenone | - | - | - | - | - | - | - | - | - | - | 5.0 |
| FIRSTCURE ST-1 | 04 | 04 | 04 | 04 | 0.4 | 04 | 0.4 | 0.4 | 0.4 | 0.4 | 0.4 |

**[Table 4]**

| Unit parts | Magenta ink. | | | | | | | | Comparative magenta ink | | |
|---|---|---|---|---|---|---|---|---|---|---|---|
| | M2 | M3 | M4 | M5 | M6 | M7 | M8 | M9 | MC1 | MC2 | MC3 |
| Magenta mill base MM1 | - | - | 16.0 | 16.0 | 16.0 | 16.0 | 16.0 | 16.0 | 160 | 16.0 | 16.0 |
| Magenta mill base MM2 | 16.0 | - | - | - | - | - | - | - | - | - | - |
| Magenta mill base MM3 | - | 16.0 | - | - | - | - | - | - | - | - | - |
| SR506D | 37.3 | 37.3 | - | 9.5 | 20.0 | - | 17.3 | 37.3 | 37.3 | 37.3 | 37.3 |
| SR531 | - | - | 49.4 | 43.4 | 17.3 | - | - | - | - | - | - |
| NVC | 13.8 | 13.8 | 3.5 | - | 13.8 | - | 13.8 | 13.8 | 13.8 | 13.8 | 13.8 |
| FA-512AS | - | - | - | - | - | 33.7 | - | - | - | - | - |
| SR395 | 11.3 | 11.3 | - | - | 11.3 | 11.3 | 11.3 | 11 3 | 11.3 | 11.3 | 11.3 |
| SR341 | 1.5 | 1.5 | 11.0 | 10.0 | 1.5 | 1.5 | 1.5 | 1.5 | 1.5 | 1.5 | 1.5 |
| RAPI-CURE DVE-3 | 3.2 | 3.2 | 3.2 | 3.2 | 32 | 3.2 | 3.2 | 3.2 | 3.2 | 32 | 32 |
| SR339A | - | - | - | - | - | 13 9 | - | - | - | - | - |
| SR9003 | - | - | - | - | - | - | 20.0 | - | - | - | - |
| IRGACURE 184 | 4.0 | 4.0 | 4.0 | 4.0 | 4.0 | 4.0 | 4.0 | 4.0 | 4.0 | 4.0 | 40 |
| Lucirin TPO | 8.5 | 8.5 | 8.5 | 8.5 | 8.5 | 8.5 | 8.5 | 8.5 | 8.5 | - | 8.5 |
| IRGACURE 819 | 3.2 | 3.2 | 3.2 | 3.2 | 32 | 3.2 | 3.2 | 3.2 | 4.0 | - | 12 |
| FIRSTCURE ITX | 0.8 | 0.8 | 0.8 | 0.8 | 0.8 | 0.8 | 0.8 | - | - | 0.8 | 2.8 |
| KAYARAD DETX-S | - | - | - | - | - | - | - | 0.8 | - | - | - |
| IRGACURE 369 | - | - | - | - | - | - | - | - | - | 4.5 | - |
| Benzophenone | - | - | - | - | - | - | - | - | - | 8.0 | - |
| FIRSTCURE ST-1 | 0.4 | 0.4 | 0.4 | 0.4 | 0.4 | 0.4 | 0.4 | 0.4 | 0.4 | 0.4 | 0.4 |

**[Table 5]**

| Unit: parts | Cyan ink | | | | | | | Comparative Cyan ink | | |
|---|---|---|---|---|---|---|---|---|---|---|
| | C2 | C3 | C4 | C5 | C6 | C7 | C8 | CC1 | CC2 | CC3 |
| Cyan mill base CM1 | - | 8.6 | 8.6 | 8.6 | 8.6 | 8.6 | 8.6 | 8.6 | 8.6 | 8.6 |
| Cyan mill base CM2 | 8.6 | - | - | - | - | - | - | - | - | - |
| SR506D | 38.6 | - | 9.5 | 20.0 | - | 18.6 | 38.6 | 38.6 | 38.6 | 38.6 |
| SR531 | - | 56.8 | 50.8 | 18.6 | - | - | - | - | - | - |
| NVC | 13.8 | 3.5 | - | 13.8 | - | 13.8 | 13.8 | 13.8 | 13.8 | 13.8 |
| FA-512AS | - | - | - | - | 33.7 | - | - | - | - | - |
| SR395 | 12.5 | - | - | 12.5 | 12.5 | 12.5 | 12.5 | 12.5 | 12.5 | 12.5 |
| SR341 | 1.8 | 11.0 | 11.0 | 1.8 | 1.8 | 1.8 | 1.8 | 1.8 | 1.8 | 1.8 |
| RAPI-CURE DVE-3 | 3.2 | 3.2 | 3.2 | 3.2 | 3.2 | 3.2 | 3.2 | 3.2 | 3.2 | 3.2 |
| SR339A | - | - | - | - | 18.7 | - | - | - | - | - |
| SR9003 | - | - | - | - | - | 20.0 | - | - | - | - |
| IRGACURE 184 | 4.6 | | | 4.6 | 4.6 | 4.6 | 4.6 | 4.6 | 4.6 | 4.6 |
| Lucirin TPO | 9.5 | 9.5 | 9.5 | 9.5 | 9.5 | 9.5 | 9.5 | 9.5 | - | 7.5 |
| IRGACURE 819 | 3.2 | 3.2 | 3.2 | 3.2 | 3.2 | 3.2 | 3.2 | 4.0 | - | 3.2 |
| FIRSTCURE ITX | 0.8 | 0.8 | 0.8 | 0.8 | 0.8 | 0.8 | - | - | 0.8 | 2.8 |
| KAYARAD DETX-S | - | - | - | - | - | - | 0.8 | - | - | - |
| IRGACURE 369 | - | - | - | - | - | - | - | - | 4.5 | - |
| Benzophenone | - | - | - | - | - | - | - | - | 8.2 | - |
| FIRSTCURE ST-1 | 0.4 | 0.4 | 0.4 | 0.4 | 0.4 | 0.4 | 0.4 | 0.4 | 0.4 | 0.4 |

**[Table 6]**

| Unit parts | Black ink | | | | | | Comparative Black ink | |
|---|---|---|---|---|---|---|---|---|
| | K2 | K3 | K4 | K5 | K6 | K7 | KCl | KC2 |
| Black mill base KM1 | 9.0 | 9.0 | 9.0 | 9.0 | 9.0 | 9.0 | 9.0 | 9.0 |
| SR506D | - | 9 5 | 20 0 | - | 150 | 35.0 | 35.0 | 35.0 |
| SR531 | 52.0 | 46.0 | 15.0 | - | - | - | - | - |
| NVC | 3.5 | - | 13.9 | - | 13.9 | 13.9 | 13.9 | 13.9 |
| FA-512AS | - | - | - | 33.7 | - | - | - | - |
| SR395 | - | - | 11.2 | 11.2 | 11.2 | 11.2 | 11.2 | 11.2 |
| SR341 | 11.0 | 11.0 | 1.8 | 1.8 | 1.8 | 1.8 | 1.8 | 1.8 |
| RAPI-CURE DVE-3 | 3.2 | 3.2 | 3.2 | 3.2 | 3.2 | 3.2 | 3.2 | 3.2 |
| SR339A | - | - | - | 15 2 | - | - | - | - |
| SR454 | - | - | - | - | 20.0 | - | - | - |
| CN964A85 | - | - | 4.6 | 4.6 | 4.6 | 4.6 | 4.6 | 4.6 |
| IRGACURE 184 | 3.0 | 3.0 | 3.0 | 3.0 | 3.0 | 3.0 | 3.0 | 3.0 |
| Lucirin TPO | 9.9 | 9.9 | 9.9 | 9.9 | 9.9 | 9.9 | 9.9 | - |
| IRGACURE 819 | 4.8 | 4.8 | 4.8 | 4.8 | 4.8 | 4.8 | 4.2 | - |
| FIRSTCURE ITX | 3.2 | 3.2 | 3.2 | 3.2 | 3.2 | - | - | 3.2 |
| KAYARAD DETX-S | - | - | - | - | - | 3.2 | - | - |
| IRGACURE 369 | - | - | - | - | - | - | - | 4.5 |
| Benzophenone | - | - | - | - | - | - | - | 5.0 |
| FIRSTCURE ST-1 | 0.4 | 0.4 | 0.4 | 0.4 | 0.4 | 0.4 | 0.4 | 0.4 |

**[Table 7]**

| | | Examples | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Yellow mk | | Y1 | Y2 | Y3 | Y4 | Y1 | Y1 | Y1 | Y5 | Y6 | Y7 | Y8 | Y9 | Y10 |
| Magenta ink | | M1 | M1 | M1 | M1 | M2 | M3 | M1 | M4 | M5 | M6 | M7 | M8 | M9 |
| Cyan ink | | C1 | C1 | C1 | C1 | C1 | C1 | C2 | C3 | C4 | C5 | C6 | C7 | C8 |
| Black ink | | K1 | K1 | K1 | K1 | K1 | K1 | K1 | K2 | K3 | K4 | K5 | K6 | K7 |
| White ink | | W1 | W1 | W1 | W1 | W1 | W1 | W1 | W1 | W1 | W1 | W1 | W1 | W1 |
| Curing properties | | A | A | A | A | A | A | A | A | A | A | B | A | A |
| Hue change (ΔE) | Red | 1.5 | 1.4 | 1.4 | 1.6 | 1.5 | 1.4 | 1.6 | 1.4 | 1.5 | 1.4 | 1.4 | 1.5 | 1.5 |
| | Green | 1.6 | 1.5 | 1.7 | 1.6 | 1.6 | 1.5 | 1.5 | 1.5 | 1.7 | 1.6 | 1.7 | 1.6 | 1.6 |
| | Blue | 1.1 | 1.1 | 1.0 | 1.2 | 1.0 | 1.1 | 1.2 | 1.2 | 10 | 1.1 | 1.2 | 10 | 1.1 |
| Banding | | A | A | A | A | A | A | A | A | A | A | A | B | B |
| Gloss | | 38 | 35 | 34 | 35 | 33 | 35 | 34 | 39 | 33 | 32 | 31 | 31 | 35 |

**[Table 8]**

| | | Comparative examples | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| Yellow ink | | YC1 | YC2 | Y1 | Y1 | Y1 | Y1 | Y1 | Y1 | Y1 | Y1 | YC1 | YC2 | Y1 | Y1 |
| Magenta ink | | M1 | M1 | MC1 | MC2 | MC3 | M1 | M1 | M1 | M1 | M1 | MC1 | MC2 | MC3 | CM1 |
| Cyan ink | | C1 | C1 | C1 | C1 | C1 | CC1 | CC2 | CC3 | C1 | C1 | CC1 | CC2 | CC3 | CC1 |
| Black ink | | K1 | K1 | K1 | K1 | K1 | K1 | K1 | K1 | KC1 | KC2 | KC1 | KC2 | K1 | K1 |
| White ink | | W1 | W1 | W1 | W1 | W1 | W1 | W1 | W1 | W1 | W1 | W1 | W1 | W1 | W1 |
| Curmg properties | | B | C | B | C | A | B | C | A | B | C | D | D | A | C |
| Hue change (ΔE) | Red | 1.3 | 1.6 | 1.0 | 1.4 | 3.1 | 1.6 | 1.6 | 1.5 | 1.5 | 1.4 | 0.9 | 1.5 | 4.5 | 1.1 |
| | Green | 1.4 | 1.5 | 1.5 | 1.5 | 1.4 | 1.0 | 1.5 | 3.6 | 1.6 | 1.6 | 1.0 | 1.5 | 5.1 | 1.2 |
| | Blue | 1.1 | 1.1 | 0.8 | 1.1 | 2.9 | 0.6 | 1.2 | 3.0 | 1.1 | 1.2 | 0.6 | 1.1 | 3.4 | 0.8 |
| Banding | | C | D | C | D | A | C | D | A | C | D | D | D | A | D |
| Gloss | | 21 | 12 | 23 | 15 | 31 | 22 | 11 | 25 | 24 | 14 | 17 | 8 | 33 | 22 |

## Claims

1. An ink set comprising a yellow ink composition, a magenta ink composition, a cyan ink composition, and a black ink composition,
wherein the respective ink compositions contain a radical polymerizable compound (component A), a radical polymerization initiator (component B), and a colorant (component C) respectively,
the component B included in the respective ink compositions contains an acylphosphine oxide compound (component B-1) and a thioxanthone compound (component B-2) respectively,
the respective ink compositions contain from 3% by mass to less than 17% by mass of the component B-1 with respect to the total amount of the ink composition respectively,
the magenta ink composition and the cyan ink composition contain from 0.1% by mass to less than 2% by mass of the component B-2 with respect to the total amount of the ink composition respectively, and
the yellow ink composition and the black ink composition contain from 2% by mass to less than 6% by mass of the component B-2 with respect to the total amount of the ink composition respectively.

2. The ink set according to Claim 1 further comprising a white ink composition containing the radical polymerizable compound (component A), the radical polymerization initiator (component B), and the colorant (component C),
wherein the component B included in the white ink composition contains the acylphosphine oxide compound (component B-1) and the thioxanthone compound (component B-2), and
the white ink composition contains from 3% by mass to less than 17% by mass of the component B-1 with respect to the total amount of the ink composition and from more than 0% by mass to less than 1% by mass of the component B-2 with respect to the total amount of the ink composition or no component B-2.

3. The ink set according to Claim 1 or 2,
wherein the component B-2 included in the respective ink compositions is isopropyl thioxanthone.

4. The ink set according to any one of Claims 1 to 3,
wherein the component A included in the respective ink compositions respectively contains from 80% by mass to less than 100% by mass of a monofunctional radical polymenzable compound with respect to the total amount of the component A.

5. The ink set according to any one of Claims 1 to 4,
wherein the component A included in the respective ink compositions respectively contains at least one compound selected from a group consisting of compounds represented by the formulae (1) to (3). 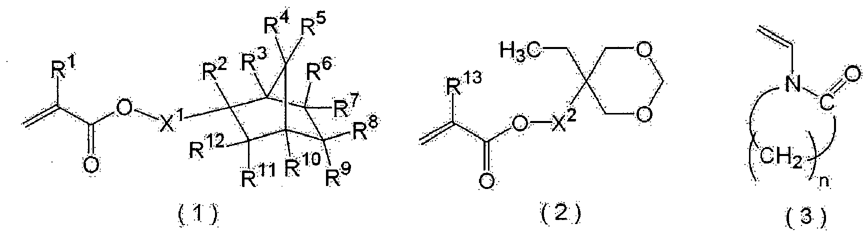 (In the formulate, R¹ represents a hydrogen atom or a methyl group, X¹ represents a single-bonded or divalent linking group, R² to R¹² represent a hydrogen atom or an alkyl group respectively, R¹³ represents a hydrogen atom or a methyl group, X² represents a single-bonded or divalent linking group, and n represents an integer of 2 to 6)

6. The ink set according to Claim 5,
wherein the component A contains at least two compounds selected from a group consisting of compounds represented by the formulae (1) to (3).

7. The ink set according to any one of Claims 1 to 6,
wherein the component C included in the yellow ink composition is at least one colorant selected from a group consisting of C. I. Pigment Yellow 120, 150, 155, and 180,
the component C included in the magenta ink composition is at least one colorant selected from a group consisting of C.I. Pigment Red 122, 202, and C. I. Pigment Violet 19,
the component C included in the cyan ink composition is at least one colorant selected from a group consisting of C. I. Pigment Blue 15:3 and 15 4, and
the component C included in the black ink composition is C.I. Pigment Black 7.

8. The ink set according to any one of Claims 1 to 7,
wherein the component A included in the yellow ink composition, the magenta ink composition, the cyan ink composition, and the black ink composition further contains a (meth)acrylate compound having a chain-like hydrocarbon group with a carbon number of 8 to 13.

9. The ink set according to any one of Claims 1 to 8 which is for inkjet recording.

10. An ink jet recording method,
wherein the ink set according to any one of Claims 1 to 9 is used.

11. An ink j et recording apparatus comprising
the ink set according to any one of Claims 1 to 9.

## Patentansprüche

1. Tintenkombination, umfassend eine gelbe Tintenzusammensetzung, eine magentafarbene Tintenzusammensetzung, eine cyanfarbene Tintenzusammensetzung und eine schwarze Tintenzusammensetzung, wobei die jeweiligen Tintenzusammensetzungen jeweils eine radikalisch polymerisierbare Verbindung (Komponente A), einen radikalischen Polymerisationsinitiator (Komponente B) und ein Farbmittel (Komponente C) enthalten;
die in den jeweiligen Tintenzusammensetzungen enthaltene Komponente B jeweils eine Acylphosphinoxid-Verbindung (Komponente B-1) und eine Thioxanthon-Verbindung (Komponente B-2) enthält, die jeweiligen Tintenzusammensetzungen jeweils 3 Massen-% bis weniger als 17 Massen-% der Komponente B-1, bezogen auf die Gesamtmenge der Tintenzusammensetzung, enthalten,
die magentafarbene Tintenzusammensetzung und die cyanfarbene Tintenzusammensetzung jeweils 0,1 Massen-% bis weniger als 2 Massen-% der Komponente B-2, bezogen auf die Gesamtmenge der Tintenzusammensetzung, enthalten und
die gelbe Tintenzusammensetzung und die schwarze Tintenzusammensetzung jeweils 2 Massen-% bis weniger als 6 Massen-% der Komponente B-2, bezogen auf die Gesamtmenge der Tintenzusammensetzung, enthalten.

2. Tintenkombination nach Anspruch 1, ferner umfassend eine weiße Tintenzusammensetzung, die die radikalisch polymerisierbare Verbindung (Komponente A), den radikalischen Polymerisationsinitiator (Komponente B) und das Farbmittel (Komponente C) enthält,
wobei die in der weißen Tintenzusammensetzung enthaltene Komponente B die Acylphosphinoxid-Verbindung (Komponente B-1) und die Thioxanthon-Verbindung (Komponente B-2) enthält und
die weiße Tintenzusammensetzung 3 Massen-% bis weniger als 17 Massen-% der Komponente B-1, bezogen auf die Gesamtmenge der Tintenzusammensetzung, und mehr als 0 Massen-% bis weniger als 1 Massen-% der Komponente B-2, bezogen auf die Gesamtmenge der Tintenzusammensetzung, oder keine Komponente B-2 enthält.

3. Tintenkombination nach Anspruch 1 oder 2,
wobei es sich bei der in den jeweiligen Tintenzusammensetzungen enthaltenen Komponente B-2 um Isopropylthioxanthon handelt.

4. Tintenkombination nach einem der Ansprüche 1 bis 3,
wobei die in den jeweiligen Tintenzusammensetzungen enthaltene Komponente A jeweils 80 Massen-% bis weniger als 100 Massen-% einer monofunktionellen radikalisch polymerisierbaren Verbindung, bezogen auf die Gesamtmenge der Komponente A, enthält.

5. Tintenkombination nach einem der Ansprüche 1 bis 4,
wobei die in den jeweiligen Tintenzusammensetzungen enthaltene Komponente A jeweils mindestens eine Verbindung aus der Gruppe bestehend aus Verbindungen der Formeln (1) bis (3) enthält. 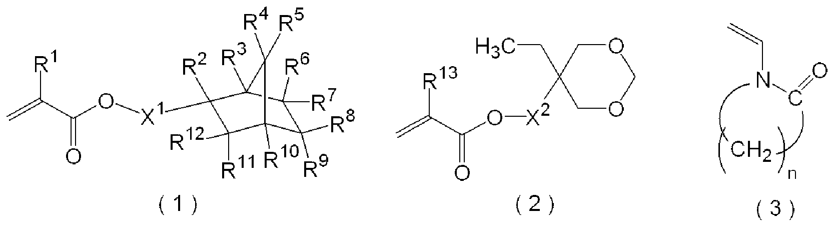 (In den Formeln steht R¹ für ein Wasserstoffatom oder eine Methylgruppe, X¹ für eine Einfachbindung oder eine zweiwertige Verknüpfungsgruppe, R² bis R¹² jeweils für ein Wasserstoffatom oder eine Alkylgruppe, R¹³ für ein Wasserstoffatom oder eine Methylgruppe, X² für eine Einfachbindung oder eine zweiwertige Verknüpfungsgruppe und n für eine ganze Zahl von 2 bis 6.)

6. Tintenkombination nach Anspruch 5,
wobei die Komponente A mindestens 2 Verbindungen aus der Gruppe bestehend aus Verbindungen der Formel (1) bis (3) enthält.

7. Tintenkombination nach einem der Ansprüche 1 bis 6,
wobei es sich bei der in der gelben Tintenzusammensetzung enthaltenen Komponente C um mindestens ein Farbmittel aus der Gruppe bestehend aus C. I. Pigment Yellow 120, 150, 155 und 180 handelt,
es sich bei der in der magentafarbenen Tintenzusammensetzung enthaltenen Komponente C um mindestens ein Farbmittel aus der Gruppe bestehend aus C. I. Pigment Red 122, 202 und C. I. Pigment Violet 19 handelt,
es sich bei der in der cyanfarbenen Tintenzusammensetzung enthaltenen Komponente C um mindestens ein Farbmittel aus der Gruppe bestehend aus C. I. Pigment Blue 15:3 und 15:4 handelt,
es sich bei der in der schwarzen Tintenzusammensetzung enthaltenen Komponente C um C. I. Pigment Black 7 handelt.

8. Tintenkombination nach einem der Ansprüche 1 bis 7,
wobei die in der gelben Tintenzusammensetzung, der magentafarbenen Tintenzusammensetzung, der cyanfarbenen Tintenzusammensetzung und der schwarzen Tintenzusammensetzung enthaltene Komponente A ferner eine (Meth)acrylat-Verbindung mit einer kettenartigen Kohlenwasserstoffgruppe mit 8 bis 13 Kohlenstoffatomen enthält.

9. Tintenkombination nach einem der Ansprüche 1 bis 8 für die Tintenstrahlaufzeichnung.

10. Tintenstrahlaufzeichnungsverfahren,
bei dem man die Tintenkombination nach einem der Ansprüche 1 bis 9 verwendet.

11. Tintenstrahlaufzeichnungsvorrichtung, umfassend die Tintenkombination nach einem der Ansprüche 1 bis 9.

## Revendications

1. Jeu d'encre comprenant une composition d'encre jaune, une composition d'encre magenta, une composition d'encre cyan, et une composition d'encre noire,
dans lequel les compositions d'encre respectives contiennent un composé polymérisable par voie radicalaire (composant A), un amorceur de polymérisation radicalaire (composant B) et une matière colorante (composant C), respectivement,
le composant B contenu dans les compositions d'encre respectives contient un composé oxyde d'acylphosphine (composant B-1) et un composé thioxanthone (composant B-2), respectivement,
les compositions d'encre respectives contiennent de 3% en masse à moins de 17% en masse du composant B-1 par rapport à la quantité totale de la composition d'encre, respectivement,
la composition d'encre magenta et la composition d'encre cyan contiennent de 0,1% en masse à moins de 2% en masse du composant B-2 par rapport à la quantité totale de la composition d'encre, respectivement, et
la composition d'encre jaune et la composition d'encre noire contiennent de 2% en masse à moins de 6% en masse du composant B-2 par rapport à la quantité totale de la composition d'encre, respectivement.

2. Jeu d'encre selon la revendication 1 comprenant en outre une composition d'encre blanche contenant le composé polymérisable par voie radicalaire (composant A), l'amorceur de polymérisation radicalaire (composant B) et la matière colorante (composant C),
dans lequel le composant B contenu dans la composition d'encre blanche contient le composé oxyde d'acylphosphine (composant B-1) et le composé thioxanthone (composant B-2), et
la composition d'encre blanche contient de 3% en masse à moins de 17% en masse du composant B-1 par rapport à la quantité totale de la composition d'encre et de plus de 0% en masse à moins de 1% en masse du composant B-2 par rapport à la quantité totale de la composition d'encre ou pas de composant B-2.

3. Jeu d'encre selon la revendication 1 ou 2, dans lequel le composant B-2 contenu dans les compositions d'encre respectives est l'isopropylthioxanthone.

4. Jeu d'encre selon l'une quelconque des revendications 1 à 3, dans lequel le composant A contenu dans les compositions d'encre respectives contient respectivement de 80% en masse à moins de 100% en masse d'un composé monofonctionnel polymérisable par voie radicalaire par rapport à la quantité totale du composant A.

5. Jeu d'encre selon l'une quelconque des revendications 1 à 4, dans lequel le composant A contenu dans les compositions d'encre respectives contient respectivement au moins un composé choisi dans un groupe constitué par les composés représentés par les formules (1) à (3) 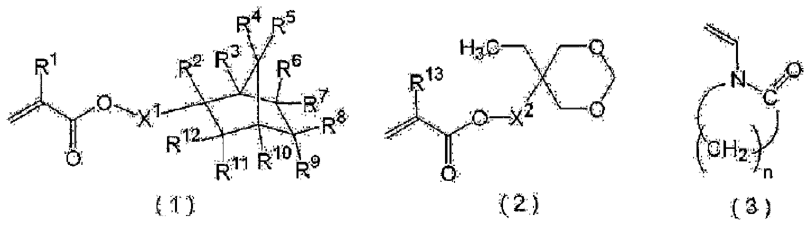 (dans les formules, R¹ représente un atome d'hydrogène ou un groupe méthyle, X¹ représente un groupe de liaison à liaison simple ou divalent, R² à R¹² représentent un atome d'hydrogène ou un groupe alkyle, respectivement, R¹³ représente un atome d'hydrogène ou un groupe méthyle, X² représente un groupe de liaison à liaison simple ou divalent, et n représente un nombre entier de 2 à 6).

6. Jeu d'encre selon la revendication 5, dans lequel le composant A contient au moins deux composés choisis dans un groupe constitué par les composés représentés par les formules (1) à (3) .

7. Jeu d'encre selon l'une quelconque des revendications 1 à 6, dans lequel le composant C contenu dans la composition d'encre jaune est au moins une matière colorante choisi dans un groupe constitué par le Pigment Jaune 120, 150, 155 et 180 du C.I.,
le composant C contenu dans la composition d'encre magenta est au moins une matière colorante choisi dans un groupe constitué par le Pigment Rouge 122, 202 du C.I., et le Pigment Violet 19 du C.I.,
le composant C contenu dans la composition d'encre cyan est au moins une matière colorante choisi dans un groupe constitué par le Pigment Bleu 15:3 et 15:4 du C.I., et
le composant C contenu dans la composition d'encre noire est le Pigment Noir 7 du C.I.

8. Jeu d'encre selon l'une quelconque des revendications 1 à 7, dans lequel le composant A contenu dans la composition d'encre jaune, la composition d'encre magenta, la composition d'encre cyan et la composition d'encre noire contient en outre un composé (méth)acrylate comportant un groupe hydrocarboné en chaîne ayant un nombre d'atomes de carbone de 8 à 13.

9. Jeu d'encre selon l'une quelconque des revendications 1 à 8 qui est destiné à l'enregistrement par jet d'encre.

10. Procédé d'enregistrement par jet d'encre, dans lequel on utilise le jeu d'encre selon l'une quelconque des revendications 1 à 9.

11. Appareil d'enregistrement par jet d'encre comprenant le jeu d'encre selon l'une quelconque des revendications 1 à 9.
